(19) Europäisches Patentamt
European Patent Office
Office européen des brevets

(11) EP 4 144 776 A1

(12) EUROPEAN PATENT APPLICATION
published in accordance with Art. 153(4) EPC

(43) Date of publication:
**08.03.2023 Bulletin 2023/10**

(21) Application number: **20933920.9**

(22) Date of filing: **09.11.2020**

(51) International Patent Classification (IPC):
***C08F 255/02** (2006.01)* ***C08F 255/04** (2006.01)*
***C08F 222/06** (2006.01)* ***H01B 3/30** (2006.01)*
***H01B 7/02** (2006.01)*

(52) Cooperative Patent Classification (CPC):
**C08F 222/06; C08F 255/02; C08F 255/04; H01B 3/30; H01B 7/02**

(86) International application number:
**PCT/CN2020/127465**

(87) International publication number:
**WO 2021/218102 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.04.2020 CN 202010357828**
**29.04.2020 CN 202010357830**
**29.04.2020 CN 202010359066**

(71) Applicants:
- **CHINA PETROLEUM & CHEMICAL CORPORATION**
  **Chaoyang District**
  **Beijing 100728 (CN)**
- **BEIJING RESEARCH INSTITUTE OF CHEMICAL INDUSTRY,**
  **CHINA PETROLEUM & CHEMICAL CORPORATION**
  **Chaoyang District**
  **Beijing 100013 (CN)**
- **Tsinghua University**
  **Haidian District**
  **Beijing 100084 (CN)**

(72) Inventors:
- **SONG, Wenbo**
  **Beijing 100013 (CN)**
- **HE, Jinliang**
  **Beijing 100084 (CN)**
- **YUAN, Hao**
  **Beijing 100013 (CN)**
- **SHAO, Qing**
  **Beijing 100013 (CN)**
- **LI, Qi**
  **Beijing 100084 (CN)**
- **SHI, Hongwei**
  **Beijing 100013 (CN)**
- **ZHANG, Qi**
  **Beijing 100013 (CN)**
- **LI, Juan**
  **Beijing 100013 (CN)**
- **WANG, Yutao**
  **Beijing 100013 (CN)**
- **HU, Jun**
  **Beijing 100084 (CN)**
- **ZOU, Fasheng**
  **Beijing 100013 (CN)**
- **ZHOU, Yao**
  **Beijing 100084 (CN)**

(74) Representative: **Hoffmann Eitle**
**Patent- und Rechtsanwälte PartmbB**
**Arabellastraße 30**
**81925 München (DE)**

# (54) POLYPROPYLENE GRAFT CONTAINING ANHYDRIDE GROUP AND PREPARATION METHOD FOR POLYPROPYLENE GRAFT

(57) The invention belongs to the field of polymers, and relates to an anhydride group-containing polypropylene graft for an insulating material and preparation method thereof. The anhydride group-containing polypropylene graft comprises structural units derived from a polypropylene copolymer, structural units derived from an anhydride monomer and structural units derived from an alkenyl-containing polymerizable monomer; the content

of the structural units derived from the anhydride monomer and the alkenyl-containing polymerizable monomer and in a grafted state in the anhydride group-containing polypropylene graft is 0.1 to 5 wt%, based on the weight of the anhydride group-containing polypropylene graft; and, the molar ratio of the structural units derived from the anhydride monomer to the structural units derived from the alkenyl-containing polymerizable monomer in the anhydride group-containing polypropylene graft is 1: 1-20; the polypropylene copolymer has at least one of the following characteristics: the comonomer content is 0.5 to 40 mol%; the content of xylene solubles is 2 to 80 wt%; the comonomer content in the xylene solubles is 10 to 70 wt%; the intrinsic viscosity ratio of the xylene solubles to the polypropylene copolymer is 0.3 to 5. The anhydride group-containing polypropylene graft of the invention can give consideration to both mechanical property and electrical property at a higher working temperature.

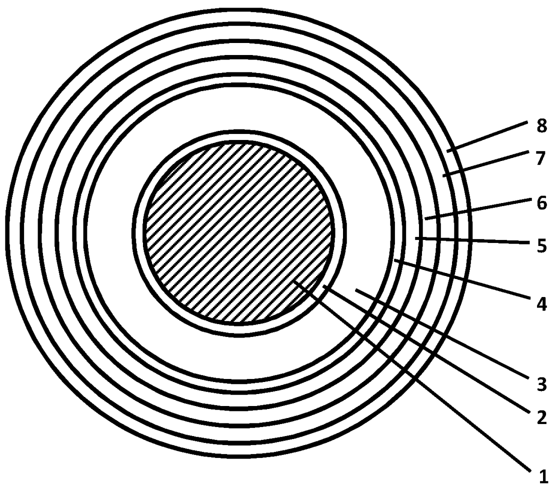


Figure 1

## Description

### Technical field

The invention belongs to the field of polymers, and particularly relates to an anhydride group-containing polypropylene graft, a method for preparing an anhydride group-containing polypropylene graft, an anhydride group-containing polypropylene graft obtained by the method, as well as use of the anhydride group-containing polypropylene graft and a cable.

### Background art

Due to excellent electrical insulating properties and low manufacturing cost, macrmolecular polymer materials are widely used as insulating materials for electrical equipment in the electrical engineering field and the power industry. Among them, polymer plastic insulating materials with simple structures represented by polyethylene particularly have a wide application, and cross-linked polyethylene, copolymerized polyolefins and rubber materials developed on this basis are widely applied to the insulation of motors and transformers, the insulation of circuits and the insulation of circuit breakers. Ethylene-based polymer insulating materials have better mechanical properties and thermal properties, excellent electrical insulating properties and lower price, and are relatively mature insulating materials developed in engineering.

With rapid development of the power industry, the power grid system moves towards higher voltage level and larger electric energy transmission capacity, and higher requirements are put forward on the performance of the insulating material. In this trend, conventional polyethylene-based insulating materials fail to meet the requirements of higher long-term service temperature and electric field (the maximum long-term service temperature of currently available crosslinked polyethylene insulating materials is 70°C). Therefore, the development of new insulating materials for electrical equipment to meet the requirements of higher operating temperature and field strength is urgently needed.

The polypropylene material, as a polymer plastic with a simple structure, has all the advantages of the polyethylene material. Compared with polyethylene, polypropylene has better electrical insulation performance and higher melting point, and is expected to adapt to more severe working environment as an insulating material. However, polypropylene has mechanical properties slightly inferior to those of polyethylene, and is brittle especially at low temperatures, and cannot be used directly as an insulating material. Therefore, it is necessary to modify polypropylene materials to achieve comprehensive control of electrical, mechanical and thermal properties, so as to maintain good insulation performance at higher temperature and electric field.

A great deal of literature and data indicate that doping nanoparticles in a polypropylene material for modification is an effective way for improving its electrical insulation performance. However, in the actual preparation, the problem that the insulation performance of the material is reduced on the contrary, due to easy agglomeration of the nanoparticles caused by the difficulty in controlling the doping behavior of the nanoparticles, limits its wide application in actual engineering.

Therefore, it is necessary to search for a novel modified polypropylene material which has obvious insulation performance controlling ability, can give consideration to both mechanical property and thermal property, has stable performance and convenient preparation and is suitable for practical application in engineering.

### Contents of the invention

The invention aims to overcome the above defects of the prior art, and provide a novel anhydride group-containing polypropylene graft which can give consideration to both mechanical property and electrical property at a higher working temperature, and is suitable for working conditions of high temperature and high operating field strength.

A first aspect of the invention is to provide an anhydride group-containing polypropylene graft for an insulating material, characterized in that the anhydride group-containing polypropylene graft comprises structural units derived from a polypropylene copolymer, structural units derived from an anhydride monomer and structural units derived from an alkenyl-containing polymerizable monomer; the content of the structural units derived from the anhydride monomer and the alkenyl-containing polymerizable monomer and in a grafted state in the anhydride group-containing polypropylene graft is 0.1 to 5 wt%, preferably 0.4 to 3 wt%, based on the weight of the anhydride group-containing polypropylene graft; and, the molar ratio of the structural units derived from the anhydride monomer to the structural units derived from the alkenyl-containing polymerizable monomer in the anhydride group-containing polypropylene graft is 1: 1-20, and preferably 1: 1-10; the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably

20 to 35 wt%; the intrinsic viscosity ratio of the xylene solubles to the polypropylene copolymer is 0.3 to 5, preferably 0.5 to 3, and more preferably 0.8 to 1.3.

A second aspect of the invention is to provide a method for preparing an anhydride group-containing polypropylene graft for an insulating material, the method comprising: subjecting a reaction mixture comprising a polypropylene copolymer, an anhydride monomer and an alkenyl-containing polymerizable monomer to grafting reaction in the presence of an inert gas, to obtain the anhydride group-containing polypropylene graft; wherein, the conditions of the grafting reaction are such that: the content of the structural units derived from the anhydride monomer and the alkenyl-containing polymerizable monomer and in a grafted state in the anhydride group-containing polypropylene graft is 0.1 to 5 wt%, preferably 0.4 to 3 wt%, based on the weight of the anhydride group-containing polypropylene graft; and, the molar ratio of the structural units derived from the anhydride monomer to the structural units derived from the alkenyl-containing polymerizable monomer in the anhydride group-containing polypropylene graft is 1: 1-20, and preferably 1: 1-10; the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

A third aspect of the invention is to provide an anhydride group-containing polypropylene graft for an insulating material obtained by the above preparation method.

A fourth aspect of the invention is to provide use of the above anhydride group-containing polypropylene graft as an insulating material.

A fifth aspect of the invention is to provide a cable, characterized in that the cable comprises: at least one conductor and at least one electrically insulating layer surrounding the conductor; wherein, the material of the electrically insulating layer is the above anhydride group-containing polypropylene graft.

A sixth aspect of the invention is to provide an insulating material characterized in that the insulating material comprises the above anhydride group-containing polypropylene graft.

## Brief description of the figures

Figure 1 is a schematic cross-sectional view of a cable according to an embodiment of the invention.

Description of the reference signs

1 - conductor; 2 - conductor shielding layer; 3 - electrically insulating layer; 4 - electrically insulating shielding layer; 5 - metal shielding layer; 6 - inner sheath layer; 7 - armor; 8 - outer sheath layer.

## Detailed description of the invention

A first aspect of the invention is to provide an anhydride group-containing polypropylene graft for an insulating material, characterized in that the anhydride group-containing polypropylene graft comprises structural units derived from a polypropylene copolymer, derived from an anhydride monomer and structural units derived from an alkenyl-containing polymerizable monomer; the content of the structural units derived from the anhydride monomer and the alkenyl-containing polymerizable monomer and in a grafted state in the anhydride group-containing polypropylene graft is 0.1 to 5 wt%, preferably 0.4 to 3 wt%, based on the weight of the anhydride group-containing polypropylene graft; and, the molar ratio of the structural units derived from the anhydride monomer to the structural units derived from the alkenyl-containing polymerizable monomer in the anhydride group-containing polypropylene graft is 1: 1-20, and preferably 1: 1-10.

The polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

Preferably, the content of the structural units derived from the anhydride monomer and in a grafted state in the anhydride group-containing polypropylene graft is 0.05 to 2 wt%, preferably 0.2 to 0.7 wt%.

Preferably, the anhydride is selected from anhydrides having at least one olefinic unsaturation. Preferably, the anhydride is selected from maleic anhydride and itaconic anhydride. Further preferably, the acid anhydride is maleic anhydride. Preferably, the invention provides an anhydride group-containing polypropylene graft for an insulating material, characterized in that the anhydride group-containing polypropylene graft comprises structural units derived from a polypropylene copolymer, derived from an anhydride monomer and structural units derived from an alkenyl-containing polymerizable monomer; the content of the structural units derived from the anhydride monomer and the alkenyl-containing polymerizable monomer and in a grafted state in the anhydride group-containing polypropylene graft is 0.1 to 5 wt%, preferably 0.4 to 3 wt%, based on the weight of the anhydride group-containing polypropylene graft; and, the molar ratio of the structural units derived from the anhydride monomer to the structural units derived from the alkenyl-containing polymerizable monomer in the anhydride group-containing polypropylene graft is 1: 1-20, and preferably 1: 1-10. The polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

Preferably, the content of the structural units derived from the anhydride monomer and in a grafted state in the anhydride group-containing polypropylene graft is 0.05 to 2 wt%, preferably 0.2 to 0.7 wt%.

In the invention, the term "structural unit" means that it is a part of the anhydride group-containing polypropylene graft, and the form thereof is not limited. Specifically, the term "structural units derived from a polypropylene copolymer" refers to products formed from a polypropylene copolymer, including not only those in "radical" form but also those in "polymer" form. The term "structural units derived from a (maleic) anhydride monomer" refers to products formed from a (maleic) anhydride monomer, including not only those in "radical" form, but also those in "monomer" form, as well those in "polymer" form. The term "structural units derived from an alkenyl-containing polymerizable monomer" refers to products formed from an alkenyl-containing polymerizable monomer, including not only those in "radical" form, but also those in "monomer" form, as well those in "polymer" form. Said "structural unit" may be a repeating unit or a non-repeating independent unit.

In the invention, the structural units derived from a (maleic) anhydride monomer "in a grafted state" refer to structural units derived from a (maleic) anhydride monomer that form a covalent bond (graft) with the polypropylene copolymer. The structural units derived from an alkenyl-containing polymerizable monomer "in a grafted state" refer to structural units derived from an alkenyl-containing polymerizable monomer that form a covalent bond (graft) with the polypropylene copolymer.

In the invention, the term "comonomer" of the polypropylene copolymer is known to those of ordinary skill in the art, and means a monomer copolymerized with propylene.

According to the invention, preferably, the anhydride group-containing polypropylene graft is prepared by a grafting reaction, preferably a solid phase grafting reaction, of a polypropylene copolymer, a (maleic) anhydride monomer and an alkenyl-containing polymerizable monomer. The grafting reaction of the invention is a radical polymerization reaction, and thus, the term "in a grafted state" means a state in which a reactant is subjected to radical polymerization and then forms a bond with another reactant. The bond includes both direct and indirect bonds.

During the grafting reaction, the anhydride monomer and the alkenyl-containing polymerizable monomer may polymerize in themselves or with each other to form a certain amount of ungrafted polymer. The term "anhydride group-containing polypropylene graft" in the invention includes not only a product (crude product) obtained directly by grafting reaction of a polypropylene copolymer, a (maleic) anhydride monomer and an alkenyl-containing polymerizable monomer, but also a graft modified polypropylene pure product obtained by further purifying the product. According to the invention, the polypropylene copolymer (the base polypropylene in the invention) is a propylene copolymer containing ethylene or higher alpha-olefin or a mixture thereof. Specifically, the comonomer of the polypropylene copolymer is at least one selected from $C_2$-$C_8$ alpha-olefins other than propylene. The $C_2$-$C_8$ alpha-olefins other than propylene include, but are not limited to: at least one selected from ethylene, 1-butene, 1-pentene, 4-methyl-1-pentene, 1-hexene, 1-heptene and 1-octene, preferably ethylene and/or 1-butene, and further preferably, the polypropylene copolymer consists of propylene and ethylene.

The polypropylene copolymer of the invention may be a heterophasic propylene copolymer. The heterophasic propylene copolymer may contain a propylene homopolymer or a propylene random copolymer matrix component (1), and another propylene copolymer component (2) dispersed therein. In the propylene random copolymer, the comonomers are randomly distributed in the main chain of the propylene polymer. Preferably, the polypropylene copolymer of the invention is a heterophasic propylene copolymer prepared *in situ* in a reactor according to existing processes.

According to a preferred embodiment, the heterophasic propylene copolymer comprises a propylene homopolymer matrix or a random copolymer matrix (1) and a propylene copolymer component (2) comprising one or more ethylene or higher alpha-olefin comonomers dispersed therein. The heterophasic propylene copolymer may be of sea-island structure or co-continuous structure.

Two heterophasic propylene copolymers are known in the art, i.e., a heterophasic propylene copolymer containing a random copolymer of propylene as matrix phase or a heterophasic propylene copolymer containing a homopolymer of propylene as matrix phase. The random copolymer matrix (1) is a copolymer in which the comonomer moieties are randomly distributed on the polymer chain, in other words, which consists of two monomer units of random length

(including single molecule) in alternating sequence. Preferably, the comonomer in the matrix (1) is selected from ethylene or butene. It is particularly preferred that the comonomer in the matrix (1) is ethylene. Preferably, the propylene copolymer (2) dispersed in the homo- or copolymer matrix (1) of the heterophasic propylene copolymer is substantially amorphous. The term "substantially amorphous" means herein that the propylene copolymer (2) has a lower crystallinity than the homo- or copolymer matrix (1).

According to the invention, in addition to the above-described compositional characteristics, the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

According to the invention, preferably, the polypropylene copolymer further has at least one of the following characteristics: the melt flow rate under a load of 2.16 kg at 230°C is 0.01 to 60 g/10 min, preferably 0.05 to 35 g/10 min, and more preferably 0.5 to 15 g/10 min. The melting temperature Tm is 100°C or higher, preferably 110 to 180°C, more preferably 110 to 170°C, more further preferably 120 to 170°C, and still more further preferably 120 to 166°C. The weight average molecular weight is preferably $20\times10^4$ to $60\times10^4$ g/mol. The base polypropylene with high Tm has satisfactory impact strength and flexibility at both low and high temperatures, and in addition, when the base polypropylene with high Tm is used, the graft modified polypropylene of the invention has the advantage of being able to withstand higher working temperatures. The polypropylene copolymer of the invention is preferably a porous granular or powdery resin.

According to the invention, preferably, the polypropylene copolymer further has at least one of the following characteristics: the flexural modulus is 10 to 1000 MPa, and preferably 50 to 600 MPa; the elongation at break is ≥ 200%, and preferably ≥300%. Preferably, the tensile strength of the polypropylene copolymer is greater than 5 MPa, and preferably 10 to 40 MPa.

The polypropylene copolymer of the invention can include, but not limited to, any commercially available polypropylene powder suitable for the invention, for example, NS06 from Sinopec Wuhan Petrochemical, SPF179 from Sinopec Qilu Petrochemical, and can also be produced by the polymerization processes recorded in the Chinese patents CN1081683, CN1108315, CN1228096, CN1281380, CN1132865C, CN102020733A and the like. Common polymerization processes include Spheripol process from Basell, Hypol process from Mitsui oil chemical, Borstar PP process from Borealis, Unipol process from DOW chemical, Innovene gas phase process from INEOS (original BP-Amoco), and the like.

According to the invention, preferably, the anhydride group-containing polypropylene graft has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1050 MPa, preferably 20 to 1000 MPa, and more preferably 50 to 500 MPa; the elongation at break is ≥ 200%, preferably ≥ 300%. Preferably, the tensile strength of the anhydride group-containing polypropylene graft is greater than 5 MPa, and preferably 10 to 40 MPa.

According to the invention, preferably, the anhydride group-containing polypropylene graft has at least one of the following characteristics:

- the working temperature of the anhydride group-containing polypropylene graft is ≥ 90°C, and preferably 90 to 160°C;
- the breakdown field strength $E_g$ at 90°C of the anhydride group-containing polypropylene graft is ≥ 210 kV/mm, and preferably 210 to 800 kV/mm;
- the breakdown field strength change rate $\Delta E/E$, which is the difference $\Delta E$ between the breakdown field strength $E_g$ at 90°C of the anhydride group-containing polypropylene graft and the breakdown field strength E at 90°C of the polypropylene copolymer divided by the breakdown field strength E at 90°C of the polypropylene copolymer, is greater than 1.8%, preferably 2 to 50%, more preferably 5 to 35%, and further preferably 8 to 28%;
- the direct current volume resistivity $\rho_{vg}$ at 90°C and 15 kV/mm field strength of the anhydride group-containing polypropylene graft is ≥ $1.5\times10^{13}$ Ω.m, preferably $1.5\times10^{13}$ Ω.m to $1.0\times10^{20}$ Ω.m;
- the ratio $\rho_{vg}/\rho_v$ of the direct current volume resistivity $\rho_{vg}$ at 90°C and 15 kV/mm field strength of the anhydride group-containing polypropylene graft to the direct current volume resistivity $\rho_v$ at 90°C and 15 kV/mm field strength of the polypropylene copolymer is greater than 2, preferably 2.1 to 40, more preferably 2.3 to 20, and further preferably 2.5 to 10.

Preferably, the dielectric constant at 90°C and 50 Hz of the anhydride group-containing polypropylene graft is greater than 2.0, preferably 2.1 to 2.5. According to the invention, the alkenyl-containing polymerizable monomer is preferably at least one selected from monomers having a structure represented by formula 1,

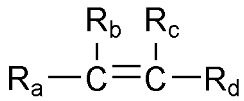
formula 1

In the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano.

Preferably, $R_b$, $R_c$, $R_d$ are each independently selected from H, substituted or unsubstituted $C_1$-$C_6$ alkyl; preferably, $R_b$, $R_c$, $R_d$ are each independently selected from H, substituted or unsubstituted $C_1$-$C_3$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano; the substituent group is halogen, hydroxy, amino, $C_1$-$C_6$ alkyl, $C_3$-$C_6$ cycloalkyl; preferably, $R_a$ is selected from substituted or unsubstituted $C_1$-$C_{12}$ alkyl, substituted or unsubstituted $C_1$-$C_{18}$ alkoxy, substituted or unsubstituted $C_6$-$C_{12}$ aryl, substituted or unsubstituted $C_1$-$C_{12}$ ester group, substituted or unsubstituted $C_1$-$C_{12}$ carboxyl, substituted or unsubstituted $C_3$-$C_{12}$ cycloalkyl or heterocyclyl, cyano, the substituent group is halogen, $C_1$-$C_6$ alkyl, $C_3$-$C_6$ cycloalkyl; more preferably, $R_a$ is selected from substituted or unsubstituted $C_1$-$C_6$ alkyl, substituted or unsubstituted $C_1$-$C_{12}$ alkoxy, substituted or unsubstituted $C_6$-$C_8$ aryl, substituted or unsubstituted $C_1$-$C_6$ ester group, substituted or unsubstituted $C_1$-$C_6$ carboxyl, substituted or unsubstituted $C_3$-$C_6$ cycloalkyl or heterocyclyl, cyano. Preferably, the heterocyclyl is selected from imidazolyl, pyrazolyl, carbazolyl, pyrrolidinonyl, pyridyl, piperidinyl, caprolactam group, pyrazinyl, thiazolyl, purinyl, morpholinyl, oxazolinyl.

More preferably, $R_b$, $R_c$, $R_d$ are each independently selected from H, substituted or unsubstituted $C_1$-$C_6$ alkyl;

$R_a$ is selected from a group represented by formula 2, a group represented by formula 3, a group represented by formula 4, a group represented by formula 6, a combination of a group represented by formula 6 and a group represented by formula 7, a heterocyclic group;

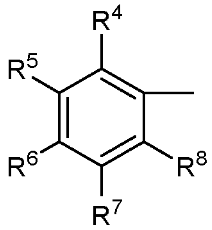
formula 2

In the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

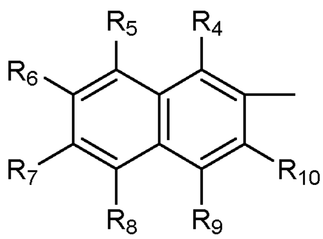
formula 3

In the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$-$R_{10}$ are each independently

selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

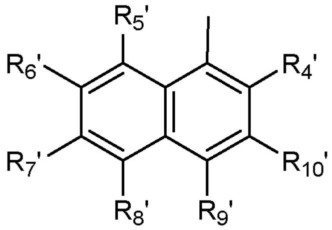
formula 4

In the formula 4, $R_4$'-$R_{10}$' are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$'-$R_{10}$' are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

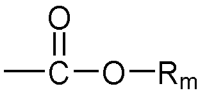
formula 6

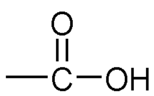
formula 7

In the formula 6, $R_m$ is selected from the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at least one selected from halogen, amino and hydroxyl.

Further preferably, the alkenyl-containing polymerizable monomer is at least one selected from vinyl acetate, styrene, α-methylstyrene, (meth)acrylates, vinyl alkyl ethers, vinyl pyrrolidone, vinyl pyridine, vinyl imidazole and acrylonitrile; the (meth)acrylate is preferably at least one selected from methyl (meth)acrylate, ethyl (meth)acrylate, and glycidyl (meth)acrylate. Preferably, the alkenyl-containing polymerizable monomer is selected from vinyl acetate, styrene, α-methyl styrene. Further preferably, the alkenyl-containing polymerizable monomer is styrene.

The anhydride group-containing polypropylene graft of the invention can be prepared by a method comprising the step of subjecting a reaction mixture comprising a polypropylene copolymer, a (maleic) anhydride monomer and an alkenyl-containing polymerizable monomer to a grafting reaction (preferably a solid-phase grafting reaction) in the presence of an inert gas to obtain the anhydride group-containing polypropylene graft.

A second aspect of the invention is to provide a method for preparing an insulating matrial comprising an anhydride group-containing polypropylene graft, the method comprising: subjecting a reaction mixture comprising a polypropylene copolymer, an anhydride monomer and an alkenyl-containing polymerizable monomer to grafting reaction in the presence of an inert gas, to obtain the anhydride group-containing polypropylene graft;
wherein, the conditions of the grafting reaction are such that: the content of the structural units derived from the anhydride monomer and the alkenyl-containing polymerizable monomer and in a grafted state in the anhydride group-containing polypropylene graft is 0.1 to 5 wt%, preferably 0.4 to 3 wt%, based on the weight of the anhydride group-containing polypropylene graft; and, the molar ratio of the structural units derived from the anhydride monomer to the structural units derived from the alkenyl-containing polymerizable monomer in the anhydride group-containing polypropylene graft is 1: 1-20, and preferably 1: 1-10.

The polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

Preferably, the content of the structural units derived from the anhydride monomer and in a grafted state in the anhydride group-containing polypropylene graft is 0.05 to 2 wt%, preferably 0.2 to 0.7 wt%.

Preferably, the anhydride is selected from anhydrides having at least one olefinic unsaturation. Preferably, the anhydride is selected from maleic anhydride and itaconic anhydride. Further preferably, the acid anhydride is maleic anhydride.

Preferably, the invention provides a method for preparing an anhydride group-containing polypropylene graft for an insulating matrial, the method comprising: subjecting a reaction mixture comprising a polypropylene copolymer, a maleic anhydride monomer and an alkenyl-containing polymerizable monomer to grafting reaction in the presence of an inert gas, to obtain the anhydride group-containing polypropylene graft;
wherein, the conditions of the grafting reaction are such that: the content of the structural units derived from the maleic anhydride monomer and the alkenyl-containing polymerizable monomer and in a grafted state in the anhydride group-containing polypropylene graft is 0.1 to 5 wt%, preferably 0.4 to 3 wt%, based on the weight of the anhydride group-containing polypropylene graft; and, the molar ratio of the structural units derived from the maleic anhydride monomer to the structural units derived from the alkenyl-containing polymerizable monomer in the anhydride group-containing polypropylene graft is 1: 1-20, and preferably 1: 1-10.

The polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

Preferably, the content of the structural units derived from the maleic anhydride monomer and in a grafted state in the anhydride group-containing polypropylene graft is 0.05 to 2 wt%, preferably 0.2 to 0.7 wt%.

The grafting reaction of the invention may be carried out with a reference to various methods which are conventional in the art, preferably a solid phase grafting reaction, for example, formation of active grafting sites on a polypropylene copolymer in the presence of a (maleic) anhydride monomer and an alkenyl-containing polymerizable monomer for grafting, or formation of active grafting sites on a polypropylene copolymer first followed by treatment with monomers for grafting. The grafting sites may be formed by treatment with a free radical initiator, or by treatment with high energy ionizing radiation or microwaves. The free radicals generated in the polymer as a result of the chemical or radiation treatment form grafting sites on the polymer and initiate the polymerization of the monomer at these sites.

Preferably, the grafting sites are initiated by a free radical initiator and the grafting reaction proceeds further. In this case, the reaction mixture comprises a free radical initiator; further preferably, the free radical initiator is selected from a peroxide-based free radical initiator and/or an azo-based free radical initiator.

Wherein, the peroxide-based radical initiator is preferably at least one selected from the group consisting of dibenzoyl peroxide, dicumyl peroxide, di-tert-butyl peroxide, lauroyl peroxide, dodecyl peroxide, tert-butyl peroxybenzoate, diisopropyl peroxydicarbonate, tert-butyl peroxy(2-ethylhexanoate) and dicyclohexyl peroxydicarbonate; the azo-based radical initiator is preferably azobisisobutyronitrile and/or azobisisoheptonitrile.

More preferably, the grafting sites are initiated by a peroxide-based free radical initiator and the grafting reaction proceeds further.

Furthermore, the grafting reaction of the invention can also be carried out according to the methods described in CN106543369A, CN104499281A, CN102108112A, CN109251270A, CN1884326A and CN 101492517B.

The amount of each component used in the grafting reaction of the invention is not particularly limited on the premise that the above-mentioned product characteristics are satisfied, and specifically, the ratio of the mass of the free radical initiator to the total mass of the (maleic) anhydride monomer and the alkenyl-containing polymerizable monomer is 0.1-10: 100, preferably 0.5-5: 100. The ratio of the total mass of the (maleic) anhydride monomer and the alkenyl-containing polymerizable monomer to the mass of the polypropylene copolymer is 0.1-8: 100, and preferably 0.3-5: 100. The mass content of the (maleic) anhydride monomer may be 5 to 100 wt%, and preferably 10 to 100 wt% of the mass of the alkenyl-containing polymerizable monomer.

The invention also has no special limitation on the technical conditions of the grafting reaction, and specifically, the temperature of the grafting reaction can be 30-130°C, and preferably 60-120°C; the time can be 0.5-10 h, and preferably 1-5 h.

In the invention, the term "reaction mixture" includes all materials added to the grafting reaction system, and the materials may be added at one time or at different stages of the reaction.

The reaction mixture of the invention may also comprise a dispersant, wherein the dispersant is preferably water or an aqueous solution of sodium chloride. The mass content of the dispersant is preferably 50-300% of the mass of the polypropylene copolymer.

The reaction mixture of the invention may further comprise an interfacial agent, wherein the interfacial agent is an organic solvent having a swelling effect on polyolefin, and is preferably at least one selected from the following organic solvents having a swelling effect on polypropylene copolymer: ether solvents, ketone solvents, aromatic hydrocarbon solvents, and alkane solvents; more preferably at least one selected the following organic solvents: chlorobenzene, polychlorinated benzene, alkanes or cycloalkanes of $C_6$ or more, benzene, $C_1$-$C_4$ alkyl substituted benzene, $C_2$-$C_6$ fatty ethers, $C_3$-$C_6$ fatty ketones and decalin; further preferably at least one selected from the following organic solvents: benzene, toluene, xylene, chlorobenzene, tetrahydrofuran, diethyl ether, acetone, hexane, cyclohexane, decalin, heptane. The mass content of the interfacial agent is preferably 1-30%, and more preferably 10-25%, of the mass of the polypropylene copolymer.

The reaction mixture of the invention may further comprise an organic solvent as a solvent for dissolving the solid radical initiator, the organic solvent preferably comprising at least one selected from $C_2$-$C_5$ alcohols, $C_2$-$C_4$ ethers and $C_3$-$C_5$ ketones, more preferably at least one selected from $C_2$-$C_4$ alcohols, $C_2$-$C_3$ ethers and $C_3$-$C_5$ ketones, and most preferably at least one selected from ethanol, diethyl ether and acetone. The mass content of the organic solvent is preferably 1-35% of the mass of the polypropylene copolymer.

In the preparation method of the anhydride group-containing polypropylene graft of the invention, the definitions of the alkenyl-containing polymerizable monomer and the polypropylene copolymer are the same as those described above, and are not described herein again.

According to the invention, the preparation method of the anhydride group-containing polypropylene graft can be selected from the following:
Method I, the preparation method comprises the following steps:

a. placing a polypropylene copolymer in a closed reactor, followed by inert gas replacement;
b. adding a free radical initiator, an anhydride monomer and an alkenyl-containing polymerizable monomer to the closed reactor, and mixing with stirring;
c. optionally adding an interfacial agent and optionally swelling the reaction system;
d. optionally adding a dispersant, and heating the reaction system to the grafting reaction temperature, to carry out the grafting reaction;
e. after the end of the reaction, optionally filtering (in the case of using an aqueous phase dispersant) and drying to obtain the anhydride group-containing polypropylene graft.

More specifically, the preparation method comprises the following steps:

a. placing a polypropylene copolymer in a closed reactor, followed by inert gas replacement;
b. dissolving a free radical initiator in an anhydride monomer and an alkenyl-containing polymerizable monomer to obtain a solution, adding the solution to the closed reactor containing the polypropylene copolymer, and mixing with stirring;
c. adding 0-30 parts of an interfacial agent, and optionally swelling the reaction system at 20-60°C for 0-24 h;
d. adding 0-300 parts of a dispersant, and heating the system to the graft polymerization temperature of 30-130°C, to carry out the reaction for 0.5-10 h;
e. after the end of the reaction, optionally filtering (in the case of using an aqueous phase dispersant) and drying to obtain the anhydride group-containing polypropylene graft.

Method II, the preparation method comprises the following steps:

a. placing a polypropylene copolymer in a closed reactor, followed by inert gas replacement;
b. mixing an organic solvent and a free radical initiator, and adding the mixture to the closed reactor;
c. removing the organic solvent;
d. adding an anhydride monomer and an alkenyl-containing polymerizable monomer, optionally adding an interfacial agent, and optionally swelling the reaction system;
e. optionally adding a dispersant, and heating the reaction system to the grafting reaction temperature, to carry out the grafting reaction;
f. after the end of the reaction, optionally filtering (in the case of using an aqueous phase dispersant) and drying to obtain the anhydride group-containing polypropylene graft.

More specifically, the preparation method comprises the following steps:

a. placing a polypropylene copolymer in a closed reactor, followed by inert gas replacement;
b. mixing an organic solvent and a free radical initiator to obtain a solution, and adding the solution to the closed reactor containing the polypropylene copolymer;
c. removing the organic solvent by inert gas purging or by vacuum;
d. adding an anhydride monomer and an alkenyl-containing polymerizable monomer, adding 0-30 parts of an interfacial agent, and optionally swelling the reaction system at 20-60°C for 0-24 h;
e. adding 0-300 parts of a dispersant, and heating the system to the graft polymerization temperature of 30-130°C, to carry out the reaction for 0.5-10 h;
f. after the end of the reaction, optionally filtering (in the case of using an aqueous phase dispersant) and drying to

obtain the anhydride group-containing polypropylene graft.

According to the method of the invention, if volatile components are present in the system after the end of the reaction, the method of the invention preferably comprises a step of devolatilization, which can be carried out by any conventional method, including vacuum extraction or the use of a stripping agent at the end of the grafting reaction. Suitable stripping agent includes, but is not limited to, an inert gas.

As described above, the term "anhydride group-containing polypropylene graft" in the invention includes not only a product (crude product) obtained directly by grafting reaction of a polypropylene copolymer, an anhydride monomer and an alkenyl-containing polymerizable monomer, but also a graft modified polypropylene pure product obtained by further purifying the product. Therefore, the preparation method of the invention optionally comprises a step of purifying the crude product. The purification can be carried out by various methods which are conventional in the art, such as extraction.

The invention has no particular limitation on the grafting efficiency of the grafting reaction, but a higher grafting efficiency is more advantageous for obtaining an anhydride group-containing polypropylene graft having desired properties by a one-step grafting reaction. Therefore, the grafting efficiency of the grafting reaction is preferably controlled to be 20 to 100%, and more preferably 25 to 80%. The term "grafting efficiency" is well known to those of ordinary skill in the art, and refers to the total amount of anhydride monomer and alkenyl-containing polymerizable monomer on the graft per total amount of anhydride monomer and alkenyl-containing polymerizable monomer charged to the reaction.

The inert gas of the invention may be various inert gases commonly used in the art, including but not limited to nitrogen, argon.

A third aspect of the invention is to provide an anhydride group-containing polypropylene graft for an insulating material obtained by the above preparation method.

A fourth aspect of the invention is to provide use of the above anhydride group-containing polypropylene graft as an insulating material.

Further preferably, the insulating material is a cable insulating material; preferably a direct current cable insulating material.

More preferably, the insulating material is a cable insulating layer material.

The anhydride group-containing polypropylene graft used in the invention can be directly used as a base material of an insulating material without blending other polymers.

A fifth aspect of the invention is to provide a cable, characterized in that the cable comprises: at least one conductor and at least one electrically insulating layer surrounding the conductor; wherein, the material of the electrically insulating layer is the anhydride group-containing polypropylene graft.

The core of the invention is to use a novel material as an electrically insulating layer of a cable, therefore, there is no special limitation on the form and the specific structure of the cable in the invention, and various cable forms (direct current or alternating current, single core or multi-core) and corresponding various structures that are conventional in the art can be used. In the cable of the invention, except for the use of the novel grafting-modified polypropylene material in the electrically insulating layer, other layer structures and other layer materials can be selected conventionally in the art.

The cable of the invention can be a direct current cable or an alternating current cable; preferably a direct current cable; more preferably, the cable is a medium high voltage direct current cable or an extra high voltage direct current cable. In the invention, low voltage (LV) denotes voltages below 1 kV, medium voltage (MV) denotes voltages in the range of 1 kV to 40 kV, high voltage (HV) denotes voltages above 40 kV, preferably above 50 kV, and extra high voltage (EHV) denotes voltages of at least 230 kV.

According to a preferred embodiment of the invention, the cable has at least one cable core, and each cable core comprises, in order from inside to outside: a conductor, an optional conductor shielding layer, an electrically insulating layer, an optional electrically insulating shielding layer, an optional metal shielding layer. The conductor shielding layer, the electrically insulating shielding layer and the metal shielding layer can be arranged according to requirements, and are generally used in cables above 6 kV.

In addition to the above structure, the cable may further comprise an armor and/or a sheath layer.

The cable of the invention may be a mono- or multi-core cable. For multi-core cable, the cable may further comprise a filling layer and/or a wrapping layer. The filling layer is formed by filling materials filled among the wire cores. The wrapping layer coats the outside of all wire cores, guarantees that the wire cores and the filling layer are in circular form, prevents the wire cores from being scratched by the armor, and plays fire-retardant effect.

In the cable of the invention, the conductor is a conductive element, generally made of a metallic material, preferably aluminum, copper or other alloys, comprising one or more metallic wires. The direct current resistance and the number of monofilaments of the conductor need to meet the requirements of GB/T3956. Preferably, the conductor has a compacted stranded round structure, with a nominal sectional area of less than or equal to 800 $mm^2$; or it has a split conductor structure, with a nominal sectional area of greater than or equal to 1000 $mm^2$, the number of conductors being not less than 170.

In the cable of the invention, the conductor shielding layer can be a covering layer made of polypropylene, polyolefin elastomer, carbon black and other materials, having a volume resistivity at 23°C of < 1.0 Ω.m, a volume resistivity at 90°C of < 3.5 Ω.m, a melt flow rate at 230°C and under a load of 2.16 kg of usually 0.01 to 30 g/10 min, preferably 0.05 to 20 g/10 min, further preferably 0.1 to 10 g/10 min, and more preferably 0.2 to 8 g/10 min; a tensile strength of ≥ 12.5 MPa; an elongation at break of ≥ 150%. The thickness of the thinnest point of the conductor shielding layer is not less than 0.5 mm, and the average thickness is not less than 1.0 mm.

In the cable of the invention, the material of the electrically insulating layer is at least one anhydride group-containing polypropylene graft, which means that the base material constituting the electrically insulating layer is the anhydride group-containing polypropylene graft, and additional components, for example, polymer components or additives, preferably additives, such as any one or more selected from antioxidants, stabilizers, processing aids, flame retardants, water tree retarding additives, acid or ion scavengers, inorganic fillers, voltage stabilizers and copper inhibitors, may be comprised in addition to the anhydride group-containing polypropylene graft. The types and amounts of additives used are conventional and known to those of ordinary skill in the art.

The method for preparing the electrically insulating layer of the invention may also be a conventional method in the field of cable preparation, for example, mixing the anhydride group-containing polypropylene graft with various optional additives, granulating the mixture by a twin-screw extruder, and then extruding the resulting granules through an extruder to obtain the electrically insulating layer. Generally, the conductor shielding material can be co-extruded with the granules of the anhydride group-containing polypropylene graft to form a structure of conductor shielding layer + electrically insulating layer, or to form a structure of conductor shielding layer + electrically insulating layer + electrically insulating shielding layer. The specific operation can be implemented using the conventional methods and process conditions in the art.

Due to the use of the anhydride group-containing polypropylene graft, the thickness of the electrically insulating layer can be only 50% to 95% of the nominal thickness value of the XLPE insulating layer in GB/T12706, and preferably, the thickness of the electrically insulating layer is 70% to 90% of the nominal thickness value of the XLPE insulating layer in GB/T12706; the eccentricity is not more than 10%.

In the cable of the invention, the electrically insulating shielding layer can be a covering layer made of polypropylene, polyolefin elastomer, carbon black and other materials, having a volume resistivity at 23°C of < 1.0 Ω.m, a volume resistivity at 90°C of < 3.5 Ω.m, a melt flow rate at 230°C and under a load of 2.16 kg of usually 0.01 to 30 g/10 min, preferably 0.05 to 20 g/10 min, further preferably 0.1 to 10 g/10 min, and more preferably 0.2 to 8 g/10 min; a tensile strength of ≥ 12.5 MPa; an elongation at break of ≥ 150%. The thickness of the thinnest point of the electrically insulating shielding layer is not less than 0.5 mm, and the average thickness is not less than 1.0 mm.

In the cable of the invention, the metal shielding layer can be a copper strip shielding layer or a copper wire shielding layer.

In the cable of the invention, the filling layer can be made of macromolecular polymer materials, such as PE/PP/PVC or recycled rubber materials.

In the cable of the invention, the wrapping layer/armor is usually a metal covering layer which is made of copper wire metal cages, lead or aluminum metal sleeves and the like and wraps the outer surface of the electrically insulating shielding layer, and has a direct current volume resistivity at room temperature of ≤ 1000 Ω.m.

In the cable of the invention, the material of the sheath layer can be any one selected from polyvinyl chloride, polyethylene or low-smoke halogen-free materials. The sheath layer comprises not only an inner sheath layer, but also an outer sheath layer.

The above structure of each layer can be formed by conventional methods in the art. For example, the conductor shielding layer, the electrically insulating layer and the sheath layer can be formed through extrusion coating by an extruder, and the metal shielding layer and the armor can be formed by winding.

The cable of the invention may be prepared by various preparation methods that are conventional in the art, and there is no particular limitation thereto in the invention.

According to a specific embodiment of the invention, the preparation method of the cable is as follows:

Preparation of a conductor: subjecting multiple monofilament conductors (e.g. made of aluminum) to a compaction stranding operation, to obtain a conductor inner core; or performing a wire bundling operation, and then subjecting each bundled monofilament conductor to a stranding operation, to obtain a conductor inner core.

Preparation of modified polypropylene particles: mixing anhydride group-containing polypropylene graft with optional additives, and granulating by a twin-screw extruder.

Preparation of a conductor shielding layer and an electrically insulating layer: co-extrusion coating the conductor shielding material and the modified polypropylene particles outside the conductor inner core by an extruder to form a conductor shielding layer + an electrically insulating layer, or a conductor shielding layer + an electrically insulating layer + an electrically insulating shielding layer (an outer shielding layer).

Preparation of a metal shielding layer: winding a copper strip or a copper wire outside the electrically insulating layer (the electrically insulating shielding layer) to form a metal shielding layer.

Preparation of an inner sheath layer: extruding the sheath layer granules outside the metal shielding layer by an extruder to form an inner sheath layer.

Preparation of an armor: preparing a steel wire or steel strip armor using galvanized steel/stainless steel/aluminum alloy, and winding a single-layer armor leftward or a double-layer armor inner layer rightward and outer layer leftward on the inner sheath layer, where the steel wire or the steel strip armor should be tight, so that the gap between adjacent steel wires/steel strips is minimum.

Preparation of an outer sheath layer: extruding the sheath layer granules outside the armor by an extruder to form an outer sheath layer. Finally, the cable is prepared.

The anhydride group-containing polypropylene graft of the invention can give consideration to both mechanical property and electrical property at a higher working temperature, and is suitable for working conditions of high temperature and high operating field strength. In addition, compared with the material in which small molecule additives are added, the anhydride group-containing polypropylene graft of the invention avoids performance reduction caused by small molecule migration, and therefore has better stability.

Compared with the existing cable, the cable of the invention can still maintain and even have higher volume resistivity and stronger breakdown resistance at higher working temperature, and meanwhile, the mechanical property of the cable can also meet the requirements for cable use. Under the condition of ensuring the same voltage grade and insulation level, compared with the electrically insulating layer of conventional cable, the electrically insulating layer made of the anhydride group-containing polypropylene graft has the advantages of thinner thickness, better heat dissipation, smaller weight and the like. Therefore, the cable has a wider application range.

A sixth aspect of the invention is to provide an insulating material characterized in that the insulating material comprises at least one anhydride group-containing polypropylene graft as described above.

Preferably, the content of the at least one anhydride group-containing polypropylene graft is 20 to 100 wt%, preferably 40 to 100 wt%, more preferably 60 to 100 wt%, further preferably 80 to 100 wt%, and more further preferably 90 to 100 wt%, based on the weight of the insulating material.

Preferably, the insulating material further comprises additives such as one or more selected from antioxidants, stabilizers, processing aids, flame retardants, water tree retarding additives, acid or ion scavengers, inorganic fillers, voltage stabilizers and copper inhibitors. The types and amounts of additives used are conventional and known to those of ordinary skill in the art

Additionally, the invention also includes embodiments set forth in the following paragraphs.

Paragraph 1. A method for preparing an insulating material by using an anhydride group-containing polypropylene graft, characterized in that the anhydride group-containing polypropylene graft comprises structural units derived from a polypropylene copolymer, structural units derived from an anhydride monomer and structural units derived from an alkenyl-containing polymerizable monomer; the content of the structural units derived from the anhydride monomer and the alkenyl-containing polymerizable monomer and in a grafted state in the anhydride group-containing polypropylene graft is 0.1 to 5 wt%, preferably 0.4 to 3 wt%, based on the weight of the anhydride group-containing polypropylene graft; and, the molar ratio of the structural units derived from the anhydride monomer to the structural units derived from the alkenyl-containing polymerizable monomer in the anhydride group-containing polypropylene graft is 1: 1-20, and preferably 1: 1-10;

the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

Paragraph 2. A method according to paragraph 1, wherein, the polypropylene copolymer has at least one of the following characteristics: the melt flow rate under a load of 2.16 kg at 230°C is 0.01 to 60 g/10 min, preferably 0.05 to 35 g/10 min, and more preferably 0.5 to 15 g/10 min. The melting temperature Tm is 100°C or higher, preferably 110 to 180°C, more preferably 110 to 170°C, more further preferably 120 to 170°C, and still more further preferably 120 to 166°C. The weight average molecular weight is preferably $20\times10^4$ to $60\times10^4$ g/mol.

Paragraph 3. A method according to paragraph 1 or 2, wherein, the comonomer of the polypropylene copolymer is at least one selected from $C_2$-$C_8$ alpha-olefins other than propylene; preferably, the comonomer of the polypropylene copolymer is at least one selected from ethylene, 1-butene, 1-pentene, 4-methyl-1-pentene, 1-hexene, 1-heptene and 1-octene; further preferably, the comonomer of the polypropylene copolymer is ethylene and/or 1-butene; and still further preferably, the polypropylene copolymer consists of propylene and ethylene.

Paragraph 4. A method according to any one of paragraphs 1-3, wherein, the anhydride group-containing polypropylene graft is prepared by a solid phase grafting reaction of a polypropylene copolymer, an anhydride monomer and an alkenyl-containing polymerizable monomer.

Paragraph 5. A method according to any one of paragraphs 1-4, wherein, the content of the structural units

derived from the anhydride monomer and in a grafted state in the anhydride group-containing polypropylene graft is 0.05 to 2 wt%, preferably 0.2 to 0.7 wt%.

Paragraph 6. A method according to any one of paragraphs 1-5, wherein, the anhydride is selected from anhydrides having at least one olefinic unsaturation; preferably, the anhydride is selected from maleic anhydride and itaconic anhydride; further preferably, the acid anhydride is maleic anhydride.

Paragraph 7. A method according to any one of paragraphs 1-6, wherein, the anhydride group-containing polypropylene graft has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1050 MPa, preferably 20 to 1000 MPa, and more preferably 50 to 500 MPa; the elongation at break is ≥ 200%, preferably ≥ 300%.

Paragraph 8. A method according to any one of paragraphs 1-7, wherein, the anhydride group-containing polypropylene graft has at least one of the following characteristics:

- the working temperature of the anhydride group-containing polypropylene graft is ≥ 90°C, and preferably 90 to 160°C;
- the breakdown field strength $E_g$ at 90°C of the anhydride group-containing polypropylene graft is ≥ 210 kV/mm, and preferably 210 to 800 kV/mm;
- the breakdown field strength change rate $\Delta E/E$, which is the difference $\Delta E$ between the breakdown field strength $E_g$ at 90°C of the anhydride group-containing polypropylene graft and the breakdown field strength E at 90°C of the polypropylene copolymer divided by the breakdown field strength E at 90°C of the polypropylene copolymer, is greater than 1.8%, preferably 2 to 50%, more preferably 5 to 35%, and further preferably 8 to 28%;
- the direct current volume resistivity $\rho_{vg}$ at 90°C and 15 kV/mm field strength of the anhydride group-containing polypropylene graft is ≥ $1.5\times10^{13}$ Ω.m, preferably $1.5\times10^{13}$ Ω.m to $1.0\times10^{20}$ Ω.m;
- the ratio $\rho_{vg}/\rho_v$ of the direct current volume resistivity $\rho_{vg}$ at 90°C and 15 kV/mm field strength of the anhydride group-containing polypropylene graft to the direct current volume resistivity $\rho_v$ at 90°C and 15 kV/mm field strength of the polypropylene copolymer is greater than 2, preferably 2.1 to 40, more preferably 2.3 to 20, and further preferably 2.5 to 10.

Paragraph 9. A method according to any one of paragraphs 1-8, wherein, the alkenyl-containing polymerizable monomer is at least one selected from a monomer having the structure represented by formula 1,

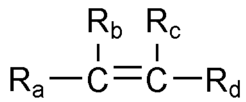
formula 1

In the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano.

Paragraph 10. A method according to paragraph 9, wherein, $R_b$, $R_c$, $R_d$ are each independently selected from H, substituted or unsubstituted $C_1$-$C_6$ alkyl; preferably, $R_b$, $R_c$, $R_d$ are each independently selected from H, substituted or unsubstituted $C_1$-$C_3$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano; the substituent group is halogen, hydroxy, amino, $C_1$-$C_6$ alkyl, $C_3$-$C_6$ cycloalkyl; preferably, $R_a$ is selected from substituted or unsubstituted $C_1$-$C_{12}$ alkyl, substituted or unsubstituted $C_1$-$C_{18}$ alkoxy, substituted or unsubstituted $C_6$-$C_{12}$ aryl, substituted or unsubstituted $C_1$-$C_{12}$ ester group, substituted or unsubstituted $C_1$-$C_{12}$ carboxyl, substituted or unsubstituted $C_3$-$C_{12}$ cycloalkyl or heterocyclyl, cyano, the substituent group is halogen, $C_1$-$C_6$ alkyl, $C_3$-$C_6$ cycloalkyl; more preferably, $R_a$ is selected from substituted or unsubstituted $C_1$-$C_6$ alkyl, substituted or unsubstituted $C_1$-$C_{12}$ alkoxy, substituted or unsubstituted $C_6$-$C_8$ aryl, substituted or unsubstituted $C_1$-$C_6$ ester group, substituted or unsubstituted $C_1$-$C_6$ carboxyl, substituted or unsubstituted $C_3$-$C_6$ cycloalkyl or heterocyclyl, cyano; preferably, the heterocyclyl is selected from imidazolyl, pyrazolyl, carbazolyl, pyrrolidinonyl, pyridyl, piperidinyl, caprolactam group, pyrazinyl, thiazolyl, purinyl, morpholinyl, oxazolinyl.

Paragraph 11. A method according to paragraph 9, wherein, $R_b$, $R_c$, $R_d$ are each independently selected from H, substituted or unsubstituted $C_1$-$C_6$ alkyl;
$R_a$ is selected from a group represented by formula 2, a group represented by formula 3, a group represented by formula 4, a group represented by formula 6, a combination of a group represented by formula 6 and a group represented by formula 7, a heterocyclic group;

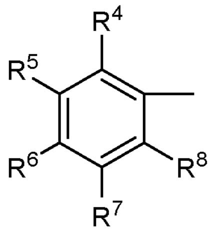

formula 2

In the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

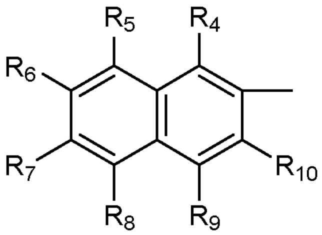

formula 3

In the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

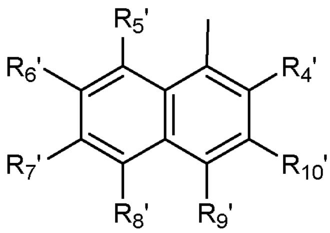

formula 4

In the formula 4, $R_4'$-$R_{10}'$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4'$-$R_{10}'$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

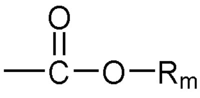 formula 6 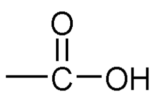 formula 7

In the formula 6, $R_m$ is selected from the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at

least one selected from halogen, amino and hydroxyl.

Paragraph 12. A method according to paragraph 9, wherein, the alkenyl-containing polymerizable monomer is at least one selected from vinyl acetate, styrene, α-methylstyrene, (meth)acrylates, vinyl alkyl ethers, vinyl pyrrolidone, vinyl pyridine, vinyl imidazole and acrylonitrile; the (meth)acrylate is preferably at least one selected from methyl (meth)acrylate, ethyl (meth)acrylate, and glycidyl (meth)acrylate; preferably, the alkenyl-containing polymerizable monomer is selected from vinyl acetate, styrene, α-methyl styrene; further preferably, the alkenyl-containing polymerizable monomer is styrene.

Paragraph 13. A method according to any one of paragraphs 1-12, wherein, the insulating material is a cable insulating material; preferably a direct current cable insulating material.

Paragraph 14. A method according to paragraph 13, wherein, the insulating material is a cable insulating layer material.

Additional features and advantages of the invention will be set forth in the detailed description of specific embodiments which follows.

## Mode of carrying out the invention

The following is a detailed description of specific embodiments of the invention. It should be understood that the specific embodiments described herein are only to illustrate and explain, not to limit, the invention.

In the following examples and comparative examples:

### 1. Determination of the comonomer content in the polypropylene copolymer:

The comonomer content was determined by quantitative Fourier Transform Infrared (FTIR) spectroscopy. The correlation of the determined comonomer content was calibrated by quantitative Nuclear Magnetic Resonance (NMR) spectroscopy. The calibration method based on the results obtained from quantitative $^{13}$C-NMR spectroscopy was carried out according to a conventional method in the art.

### 2. Determination of the content of xylene solubles in the polypropylene copolymer, the comonomer content in the xylene solubles and the intrinsic viscosity ratio of the xylene solubles to the polypropylene copolymer:

The determination was carried out using a CRYST-EX instrument from Polymer Char according to the following steps: dissolving with trichlorobenzene solvent by heating to 150°C, keeping the temperature for 90 min, sampling and testing, then cooling to 35°C, keeping the temperature for 70 min, sampling and testing.

### 3. Determination of the weight average molecular weight of the polypropylene copolymer:

The sample was dissolved in 1,2,4-trichlorobenzene at a concentration of 1.0 mg/ml and determined by high temperature GPC using PL-GPC 220 type gel permeation chromatograph from Polymer Laboratory. The determination temperature was 150°C and the solution flow rate was 1.0 ml/min. A standard curve was plotted by taking the molecular weight of polystyrene as an internal reference, and the molecular weight and molecular weight distribution of the sample were calculated according to the outflow time.

### 4. Determination of the melt flow rate MFR:

The determination was carried out at 230°C under a load of 2.16 kg using 7026 type melt index apparatus from CEAST, according to the method specified in GB/T3682-2018.

### 5. Determination of the melting temperature Tm:

The melting and crystallization processes of the material were analyzed by differential scanning calorimetry. The specific operation was as follows: under the protection of nitrogen, 5-10 mg of a sample was measured by a three-stage temperature rise and fall measurement method from 20°C to 200°C, and the melting and crystallization processes of the material were reflected by the change of heat flow, so that the melting temperature Tm was calculated.

### 6. Determination of the grafting efficiency GE, the parameter M1, and the parameter M2:

2-4 g of the grafting product was put into a Soxhlet extractor, and extracted with ethyl acetate for 24 hours, unreacted monomers and homopolymers were removed, and a pure grafting product was obtained, which was dried

and weighed. Then, the parameters M1, M2 and the grafting efficiency GE were calculated.

The mass content, $\%G_{MAH}$, of maleic anhydride was tested and calculated according to the method described in the literature (Zhang Guangping, Solid-phase grafting of maleic anhydride onto polypropylene in helical ribbon reactor, China Plastics, Vol. 16, No. 2, Feb., 2002, 69-71).

The parameter M1 represents the content of the structural units derived from the maleic anhydride monomer and the alkenyl-containing polymerizable monomer and in a grafted state in the anhydride group-containing polypropylene graft, the parameter M2 represents the content of the structural units derived from the maleic anhydride monomer and in a grafted state in the anhydride group-containing polypropylene graft. The calculation formulas of M1, M2 and GE in the invention are as follows:

$$M1=\frac{w_2-w_0}{w_1}\times 100\%$$

$$M2=\frac{w_2\times\%G_{MAH}}{w_1}\times 100\%$$

$$GE=\frac{w_2-w_0}{w_3}\times 100\%$$

In the above formulas, $w_0$ denotes the mass of the PP matrix; $w_1$ denotes the mass of the graft product before extraction; $w_2$ denotes the mass of the graft product after extraction; $w_3$ denotes the total mass of the maleic anhydride monomer and the alkenyl-containing polymerizable monomer added.

**7. Determination of the direct current volume resistivity:**

The determination was carried out according to the method specified in GB/T 1410-2006.

**8. Determination of the breakdown field strength:**

The determination was carried out according to the method specified in GB/T1408-2006.

**9. Determination of the tensile Strength:**

The determination was carried out according to the method specified in GB/T1040.2-2006.

**10. Determination of the flexural modulus:**

The determination was carried out according to the method specified in GB/T9341-2008.

**11. Determination of the elongation at break:**

The determination was carried out according to the method specified in GB/T1040-2006.

**12. Determination of the dielectric constant and the dielectric dissipation factor:**

The determination was carried out according to the method specified in GB/T1409-2006.

**13. Determination of the main insulation conductivity (resistivity) ratio of the cable:**

The determination was carried out according to the method specified in appendix A of TICW 7.1-2012. The main insulation conductivity ratio of the cable is equal to the main insulation conductivity of the cable at 90°C divided by the main insulation conductivity of the cable at 30°C.

**14. Determination of the electric field distortion rate:**

The insulation space charge injection test of the cable was performed according to the method specified in appendix B of TICW 7.1-2012.

**15. Determination of the direct current withstand voltage test:**

The cable was pressurized continuously at room temperature for 2 h with 1.85 times negative rated voltage. No breakdown and discharge phenomena denotes pass, otherwise fail.

**16. Determination of the load cycle:**

The cable at a rated service temperature was heated to 90°C, pressurized first with 1.85 times rated voltage for 8 h, and then naturally cooled with the removal of the voltage for 16 h. The cycle was performed for 12 days. No breakdown phenomenon denotes pass

Raw materials used in the examples are listed in Table A below.

Table A

| Name | Description |
|---|---|
| Polypropylene copolymer 1* | Self made with a reference to the method described in CN101679557A |
| Polypropylene copolymer 2* | Self made with a reference to the method described in CN101679557A |
| Polypropylene copolymer 3* | Self made with a reference to the method described in CN101679557A |
| Polypropylene copolymer 4* | Self made with a reference to the method described in CN101058654A |
| Polypropylene copolymer 5* | Self made with a reference to the method described in CN101058654A |
| Polypropylene copolymer 6* | Self made with a reference to the method described in CN101058654A |
| Polypropylene T30S | Polypropylene homopolymer, Sinopec Zhenhai Refining & Chemical Co., Ltd. |
| Dibenzoyl peroxide | J&K Chemicals |
| Lauroyl peroxide | J&K Chemicals |
| Tert-butyl peroxy(2-ethylhexanoate) | adamas-beta |
| Maleic anhydride | Sinopharm Chemical Reagent Co., Ltd |
| Styrene | J&K Chemicals |
| p-methylstyrene | J&K Chemicals |
| Vinyl acetate | |
| Styrene/maleic anhydride copolymer | Sigm Sinopharm Chemical Reagent Co., Ltd Sigma-Aldrich LLC |
| *Polypropylene copolymer 1: polypropylene copolymer used in Example 1, Comparative Example 2, Comparative Example 3.<br>*Polypropylene copolymer 2: polypropylene copolymer used in Example 2.<br>*Polypropylene copolymer 3: polypropylene copolymer used in Example 3.<br>*Polypropylene copolymer 4: polypropylene copolymer used in Example 4.<br>*Polypropylene copolymer 5: polypropylene copolymer used in Example 5.<br>*Polypropylene copolymer 6: polypropylene copolymer used in Example 6. | |

## Example 1

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/10min, Tm=143.4°C,

the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. A solution of 1.3 g of dibenzoyl peroxide, 10 g of maleic anhydride and 40 g of styrene was added, the reaction mixture was mixed with stirring for 30 min, swelled at 40°C for 2 h, heated to 90°C, and reacted for 4 h. After the end of the reaction, the reaction product was cooled by nitrogen purging, to obtain a polypropylene-g-styrene/maleic anhydride material product C1.

Various performance parameters of the obtained product were tested, and the results are shown in Table 1.

## Example 2

A basic polypropylene copolymer powder with the following characteristics was selected: the comonomer ethylene content was 14.7 wt%, the content of xylene solubles was 41.7 wt%, the comonomer content in the xylene solubles was 34.5 wt%, the intrinsic viscosity ratio of the xylene solubles to the polypropylene copolymer was 0.91, the weight average molecular weight was $36.6\times10^4$ g/mol, the MFR at 230°C under a load of 2.16 kg was 1.54 g/10min, Tm=164.9°C, the breakdown field strength at 90°C was 248 kV/mm, the direct current volume resistivity at 90°C and 15 kV/mm was 7.25E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. A solution of 0.6 g dibenzoyl peroxide, 5 gmaleic anhydride and 22 g styrene was added, the reaction mixture was mixed with stirring for 30 min, swelled at 40°C for 3 h, heated to 95°C, and reacted for 4 h. After the end of the reaction, the reaction product was cooled by nitrogen purging, to obtain a polypropylene-g-styrene/maleic anhydride material product C2.

Various performance parameters of the obtained product were tested, and the results are shown in Table 1.

## Example 3

A basic polypropylene copolymer powder with the following characteristics was selected: the comonomer ethylene content was 20.1 wt%, the content of xylene solubles was 66.1 wt%, the comonomer content in the xylene solubles was 29.5 wt%, the intrinsic viscosity ratio of the xylene solubles to the polypropylene copolymer was 1.23, the weight average molecular weight was $53.8\times10^4$g/mol, the MFR at 230°C under a load of 2.16 kg was 0.51 g/10min, Tm=142.5 °C, the breakdown field strength at 90°C was 176 kV/mm, the direct current volume resistivity at 90°C and 15 kV/mm was 5.63E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. A solution of 2.6 g of dibenzoyl peroxide, 12 g of maleic anhydride and 88 g of styrene was added, the reaction mixture was mixed with stirring for 30 min, swelled at 40°C for 2 h, heated to 90°C, and reacted for 4 h. After the end of the reaction, the reaction product was cooled by nitrogen purging, to obtain a polypropylene-g-styrene/maleic anhydride material product C3.

Various performance parameters of the obtained product were tested, and the results are shown in Table 1.

## Example 4

A basic polypropylene copolymer powder with the following characteristics was selected: the comonomer ethylene content was 9.3 wt%, the content of xylene solubles was 21.0 wt%, the comonomer content in the xylene solubles was 35.4 wt%, the intrinsic viscosity ratio of the xylene solubles to the polypropylene copolymer was 1.68, the weight average molecular weight was $30.4\times10^4$ g/mol, the MFR at 230°C under a load of 2.16 kg was 5.69 g/10min, Tm=163.0°C, the breakdown field strength at 90°C was 288 kV/mm, the direct current volume resistivity at 90°C and 15 kV/mm was 1.32E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. A solution of 5.0 g of tert-butyl peroxy(2-ethylhexanoate), 25 g of maleic anhydride, 50 g of vinyl acetate and 100 g of toluene was added, the reaction mixture was mixed with stirring for 30 min, heated to 95°C, and reacted for 4 h. After the end of the reaction, the reaction product was cooled by nitrogen purging, to obtain a polypropylene-g-vinyl acetate/maleic anhydride material product C4.

Various performance parameters of the obtained product were tested, and the results are shown in Table 1.

## Example 5

A basic polypropylene copolymer powder with the following characteristics was selected: the comonomer ethylene content was 4.8 wt%, the content of xylene solubles was 19.2 wt%, the comonomer content in the xylene solubles

was 17.6 wt%, the intrinsic viscosity ratio of the xylene solubles to the polypropylene copolymer was 1.04, the weight average molecular weight was $29.2\times10^4$ g/mol, the MFR at 230°C under a load of 2.16 kg was 5.37 g/10min, Tm=163.3°C, the breakdown field strength at 90°C was 322 kV/mm, the direct current volume resistivity at 90°C and 15 kV/mm was 1.36E13 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. A solution of 0.6 g of dibenzoyl peroxide, 10 g of maleic anhydride, 11 g of styrene and 50 g of toluene was added, the reaction mixture was mixed with stirring for 30 min, swelled at 50°C for 2 h, heated to 100°C, and reacted for 1 h. After the end of the reaction, the reaction product was cooled by nitrogen purging, to obtain a polypropylene-g-styrene/maleic anhydride material product C5.

Various performance parameters of the obtained product were tested, and the results are shown in Table 1.

## Example 6

A basic polypropylene copolymer powder with the following characteristics was selected: the comonomer ethylene content was 12.6 wt%, the content of xylene solubles was 30.6 wt%, the comonomer content in the xylene solubles was 43.6 wt%, the intrinsic viscosity ratio of the xylene solubles to the polypropylene copolymer was 1.84, the weight average molecular weight was $27.1\times10^4$ g/mol, the MFR at 230°C under a load of 2.16 kg was 8.46 g/10min, Tm=162.0°C, the breakdown field strength at 90°C was 261 kV/mm, the direct current volume resistivity at 90°C and 15 kV/mm was 9E12 Ω·m, and fine powder smaller than 40 meshes was removed by sieving. 2.0 kg of the above basic polypropylene copolymer powder was weighed, and added to a 10 L reaction kettle with a mechanical stirrer, the reaction system was sealed, and oxygen was removed by nitrogen replacement. 2 g of lauroyl peroxide and 20 g of maleic anhydride were dissolved in 150 g of acetone, the resulting acetone solution was added to the reaction system, heated to 50°C, acetone was removed by nitrogen purging for 30 min, 60 g of α-methylstyrene was added dropwise to the reaction kettle, the solution was mixed with stirring for 30 min, swelled at 40°C for 2 h, heated to 85°C, 4 kg of a dispersant water was added at 85°C, and the reaction was carried out for 2 h. After the end of the reaction, the reaction product was cooled, filtered to remove the dispersant water, and dried under vacuum at 70°C for 10 h, to obtain polypropylene-g-α-methylstyrene/maleic anhydride material product C6.

Various performance parameters of the obtained product were tested, and the results are shown in Table 1.

## Example 7

2.0 kg of the basic polypropylene copolymer powder of Example 1 was weighed, and added to a 10 L reaction kettle with a mechanical stirrer, the reaction system was sealed, and oxygen was removed by nitrogen replacement. A solution of 4.0 g of dibenzoyl peroxide, 30 g of maleic anhydride and 120 g of styrene was added, the reaction mixture was mixed with stirring for 30 min, swelled at 40°C for 2 h, heated to 90°C, and reacted for 4 h. After the end of the reaction, the reaction product was cooled by nitrogen purging, to obtain a polypropylene-g-styrene/maleic anhydride product C7.

Various performance parameters of the obtained product were tested, and the results are shown in Table 1.

## Comparative Example 1

2.0 kg of T30S powder (the breakdown field strength at 90°C was 347 kV/mm, and the direct current volume resistivity at 90°C and 15 kV/mm was 1.18E13 Ω·m) from which fine powder smaller than 40 meshes has been removed by sieving was weighed, and added to a 10 L reaction kettle with a mechanical stirrer, the reaction system was sealed, and oxygen was removed by nitrogen replacement. A solution of 1.3 g of dibenzoyl peroxide, 10 g of maleic anhydride and 40 g of styrene was added, the reaction mixture was mixed with stirring for 60 min, swelled at 40°C for 2 h, heated to 90°C, and reacted for 4 h. After the end of the reaction, the reaction product was cooled by nitrogen purging, to obtain a polypropylene-g-styrene/maleic anhydride material product D1.

Various performance parameters of the obtained product were tested, and the results are shown in Table 1.

## Comparative Example 2

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$ g/mol, the MFR at 230°C under a load of 2.16 kg was 1.21 g/10min, Tm=143.4°C, the breakdown field strength at 90°C was 236 kV/mm, the direct current volume resistivity at 90°C and 15 kV/mm was 1.16E13 Ω·m, and fine powder smaller than 40 meshes was removed by sieving. 2.0 kg of the above basic polypropylene

copolymer powder was weighed, and added to a 10 L reaction kettle with a mechanical stirrer, the reaction system was sealed, and oxygen was removed by nitrogen replacement. A solution of 5 g of dibenzoyl peroxide, 40 g of maleic anhydride and 160 g of styrene was added, the reaction mixture was mixed with stirring for 60 min, swelled at 40°C for 2 h, heated to 90°C, and reacted for 4 h. After the end of the reaction, the reaction product was cooled by nitrogen purging, to obtain a polypropylene-g-styrene/maleic anhydride material product D2.

Various performance parameters of the obtained product were tested, and the results are shown in Table 1.

## Comparative Example 3

A basic polypropylene copolymer powder with the following characteristics was selected: the comonomer ethylene content was 18.1 wt%, the content of xylene solubles was 48.7 wt%, the comonomer content in the xylene solubles was 31.9 wt%, the intrinsic viscosity ratio of the xylene solubles to the polypropylene copolymer was 0.89, the weight average molecular weight was $34.3\times10^4$g/mol, the MFR at 230°C under a load of 2.16 kg was 1.21 g/10min, Tm=143.4°C, the breakdown field strength at 90°C was 236kV/mm, the direct current volume resistivity at 90°C and 15 kV/mm was 1.16E13 $\Omega\cdot$m, and fine powder smaller than 40 meshes was removed by sieving. 2000 g of the above basic polypropylene copolymer powder was weighed, and mixed with 50 g styrene/maleic anhydride copolymer by a screw extruder, to obtain a blend D3.

Various performance parameters of the obtained product were tested, and the results are shown in Table 1.

Table 1

| | M1 | M2 | MFR | Grafting efficiency | Tensile strength MPa | Elongation at break | Flexural modulus MPa | The breakdown field strength $E_g$ at 90°C kV/mm | $\Delta E/E$ (90°C) (%) | $\rho_{vg}$ (90°C, 15kV/mm) Ω•m | $\rho_{vg}/\rho_v$ (90°C, 15kV/mm) | Dielectric constant (50Hz, 90°C) | Dielectric loss (50Hz, 90°C) |
|---|---|---|---|---|---|---|---|---|---|---|---|---|---|
| C1 | 1.27% | 0.44% | 0.71 | 52% | 12.7 | >300% | 190 | 282 | 19.5 | 5.41E+13 | 4.66 | 2.2 | 4.0E-3 |
| C2 | 0.72% | 0.22% | 1.27 | 54% | 15.6 | >300% | 420 | 278 | 12.1 | 3.12E+13 | 4.30 | 2.2 | 3.9E-3 |
| C3 | 2.60% | 0.54% | 0.26 | 55% | 20.1 | >300% | 100 | 211 | 19.9 | 1.63E+13 | 2.90 | 2.1 | 4.2E-3 |
| C4 | 0.84% | 0.36% | 5.84 | 23% | 23.7 | >300% | 1050 | 300 | 4.2 | 3.18E+13 | 2.41 | 2.0 | 5.7E-3 |
| C5 | 0.52% | 0.23% | 5.01 | 50% | 23.1 | >300% | 680 | 352 | 9.3 | 8.60E+13 | 6.32 | 2.2 | 2.5E-3 |
| C6 | 0.98% | 0.45% | 7.71 | 25% | 22.0 | >300% | 820 | 283 | 8.4 | 8.79E+13 | 9.77 | 2.2 | 3.3E-3 |
| C7 | 3.49% | 1.33% | 0.46 | 50% | 12.8 | >300% | 200 | 241 | 2.1 | 2.56E+13 | 2.21 | 2.1 | 4.2E-3 |
| D1 | 1.03% | 0.40% | 1.93 | 42% | 36.1 | >300% | 1570 | 466 | 34.3 | 1.20E+14 | 10.17 | 2.2 | 1.1E-3 |
| D2 | 5.11% | 1.73% | 0.22 | 56% | 13.0 | >300% | 210 | 207 | -12.3 | 1.03E+13 | 0.89 | 2.1 | 4.4E-3 |
| D3 | - | | 1.00 | - | 12.7 | >300% | 190 | 181 | -23.3 | 8.37E+12 | 0.72 | 2.1 | 4.5E-3 |

Notes: M1 represents the content of the structural units derived from the maleic anhydride monomer and the alkenyl-containing polymerizable monomer and in a grafted state in the anhydride group-containing polypropylene graft.

M2 represents the content of the structural units derived from the maleic anhydride monomer and in a grafted state in the anhydride group-containing polypropylene graft.

The breakdown field strength change rate $\Delta E/E$ refers to a ratio of the difference $\Delta E$ between the breakdown field strength $E_g$ at 90°C of the anhydride group-containing polypropylene graft product and the breakdown field strength E at 90°C of the basic polypropylene copolymer powder to the breakdown field strength E at 90°C of the basic polypropylene copolymer powder, multiplied by 100%.

$\rho_{vg}$ refers to the direct current volume resistivity at 90°C and 15 kV/mm field strength of the anhydride group-containing polypropylene graft product, $\rho_{vg}/\rho_v$ refers to a ratio of the direct current volume resistivity $\rho_{vg}$ at 90°C and 15 kV/mm field strength of the anhydride group-containing polypropylene graft product to the direct current volume resistivity $\rho_v$ at 90°C and 15 kV/mm field strength of the basic polypropylene copolymer powder.

By comparing the data of Example 1 and Comparative Example 1, it can be seen that the use of T30S powder as the base powder results in a polypropylene-g-styrene/maleic anhydride material product with too high flexural modulus and poor mechanical properties, which cannot meet the processing requirements of insulating materials.

By comparing the data of Example 1 and Comparative Example 2, it can be seen that an excessive addition of maleic anhydride monomer/alkenyl-containing polymerizable monomer (too high M1 value) results in a reduction of the breakdown field strength and the volume resistivity of the obtained polypropylene-g-styrene/maleic anhydride material product, affecting the electrical properties of the product

By comparing the data of Example 1 and Comparative Example 3, it can be seen that the manner of blending styrene /maleic anhydride copolymer results in a great reduction of the breakdown field strength and the volume resistivity of the product, greatly affecting the electrical properties of the product

In conclusion, as can be seen from the data in Table 1, the anhydride group-containing polypropylene graft of the invention has good mechanical properties due to a great reduction of the flexural modulus, and the breakdown field strengths of the graft products are all improved compared with the polypropylene copolymer non-grafted with the maleic anhydride monomer/alkenyl-containing polymerizable monomer, which indicates that the anhydride group-containing polypropylene graft of the invention has good electrical properties at the same time.

In addition, as can be seen from the dielectric constant and dielectric loss data, the graft modification does not affect the dielectric constant and dielectric loss of the material, and the material of the invention satisfies the necessary conditions for insulation.

## Example A

Preparation of a conductor: subjecting multiple aluminum monofilament conductors to a wire bundling operation, and then preparing the bundled monofilament conductor into a conductor inner core.

Preparation of anhydride group-containing polypropylene graft particles: blending the following components in parts by mass: 100 parts of the anhydride group-containing polypropylene grafts obtained in Example C1, Example C3, Example C5 and Example C7, and 0.3 part of antioxidant 1010/168/calcium stearate (mass ratio: 2: 2: 1); granulating by a twin-screw extruder at the rotation speed of 300 r/min and the granulation temperature of 210-230°C.

Preparation of a conductor shielding layer and an electrically insulating layer: co-extrusion coating the conductor shielding material PSDWMP-00012 (Zhejiang Wanma Co., Ltd.) and the above anhydride group-containing polypropylene graft particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 160-210°C.

Preparation of a metal shielding layer: winding a copper strip outside the electrically insulating layer (the electrically insulating shielding layer) with T1 copper to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor with a nominal diameter of 1.25 mm using 304 stainless steel, and winding a single-layer armor leftward on the inner sheath layer, where the armor should be tight, so that the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the high-performance polypropylene insulating layer was finally obtained. The schematic cross-sectional view of the cable is shown in Figure 1.

According to the above method, cables with energy levels in the range of 6-35 kV were prepared based on the materials of Example C1, Example C3, Example C5 and Example C7 respectively, the sectional area of the conductor in the cables was 240-400 $mm^2$, the thickness of the conductor shielding layer was 1-3 mm, the thickness of the electrically insulating layer was 2-8 mm, the thickness of the electrically insulating shielding layer was 0.5-1.5 mm, the thickness of the armor was 0.5-1 mm, the thickness of the inner sheath layer was 1-2 mm, and the thickness of the outer sheath layer was not less than 1.8 mm.

## Test Example A

The cables prepared in Example B were tested. The main insulation conductivity test result of the cables: the conductivity ratio of each cable at 90°C and 30°C was less than 100. The insulation space charge injection test result of the cables: the electric field distortion rate of each cable was less than 20%. The direct current withstand voltage test result: each cable had no breakdown and discharge phenomena, denoting pass. The load cycle test result: each cable had no breakdown phenomenon, denoting pass.

## Example A1

Preparation of a conductor: subjecting seventy-six aluminum monofilaments with a diameter of 2.5 mm to a compaction stranding operation, to obtain an aluminum conductor inner core.

Preparation of anhydride group-containing polypropylene graft particles: blending the following components in parts by mass: 100 parts of the anhydride group-containing polypropylene graft obtained in Example 2, and 0.3 part of antioxidant 1010/168/calcium stearate (mass ratio: 2: 2: 1); granulating by a twin-screw extruder at the rotation speed of 300 r/min and the granulation temperature of 210-230°C.

Preparation of a conductor shielding layer and an electrically insulating layer: co-extrusion coating the conductor shielding material PSDWMP-00012 (Zhejiang Wanma Co., Ltd.) and the above anhydride group-containing polypropylene graft particles outside the conductor inner core by an extruder to form a conductor shielding layer + an electrically insulating layer, or a conductor shielding layer + an electrically insulating layer + an electrically insulating shielding layer (an outer shielding layer), wherein the extrusion temperature was 190-210°C.

Preparation of a metal shielding layer: winding a copper wire outside the electrically insulating layer (the electrically insulating shielding layer) with twenty-five T1 copper wires with a diameter of 0.3 mm to form a metal shielding layer.

Preparation of an inner sheath layer: extruding St-2 PVC granules (Dongguan Haichuang Electronics Co., Ltd.) outside the metal shielding layer by an extruder to form an inner sheath layer.

Preparation of an armor: preparing a steel wire armor using fifty 304 stainless steel wires with a diameter of 6.0 mm, and winding a single-layer armor leftward on the inner sheath layer, where the armor should be tight, so that the gap between adjacent steel wires is minimum.

Preparation of an outer sheath layer: extruding St-2 PVC granules (Dongguan Haichuang Electronics Co., Ltd.) outside the armor by an extruder to form an outer sheath layer.

The cable with the high-performance polypropylene insulating layer was finally obtained. The schematic cross-sectional view of the cable is shown in Figure 1.

According to the above method, a cable with an energy level of 10 kV was prepared based on the material of Example 2, the sectional area of the conductor in the cable was about 400 $mm^2$, the average thickness of the conductor shielding layer was 1.15 mm, the average thickness of the electrically insulating layer was 2.60 mm, the average thickness of the electrically insulating shielding layer was 1.06 mm, the average thickness of the metal shielding layer was 1.00 mm, the cable insulation eccentricity was 5.1%, the average thickness of the armor was 6.02 mm, the average thickness of the inner sheath layer was 2.10 mm, and the average thickness of the outer sheath layer was 2.35 mm.

## Test Example A1

The prepared cable was tested. The main insulation conductivity test result of the cable: the conductivity ratio of the cable at 90°C and 30°C was 44.2. The insulation space charge injection test result of the cable: the electric field distortion rate of the cable was 15.4%. The direct current withstand voltage test result: the cable had no breakdown and discharge phenomena, denoting pass. The load cycle test result: the cable had no breakdown phenomenon, denoting pass.

It can be seen that, compared with the existing cable, the cable comprising the anhydride group-containing polypropylene graft of the invention as the main insulating layer has higher working temperature, and can still maintain and even have higher volume resistivity and stronger breakdown resistance at higher working temperature. Under the condition of ensuring the same voltage grade and insulation level, compared with the electrically insulating layer of conventional cable, the electrically insulating layer made of the anhydride group-containing polypropylene graft has the advantages of thinner thickness, better heat dissipation and smaller weight.

The examples of the invention have been described above, the above description is exemplary, not exhaustive, and the invention is not limited to the examples. Without departing from the scope and spirit of the examples, many modifications and changes are obvious to those of ordinary skill in the art.

The endpoints of ranges and any values disclosed herein are not to be limited to the precise ranges or values, which are to be understood to encompass values close to those ranges or values. For numerical ranges, the endpoints of each range, the endpoints of each range and the individual point values, as well as the individual point values may be combined with each other to yield one or more new numerical ranges, which numerical ranges should be deemed to be specifically disclosed herein.

## Claims

1. An anhydride group-containing polypropylene graft for an insulating material, **characterized in that**, the anhydride group-containing polypropylene graft comprises structural units derived from a polypropylene copolymer, structural

units derived from an anhydride monomer and structural units derived from an alkenyl-containing polymerizable monomer; the content of the structural units derived from the anhydride monomer and the alkenyl-containing polymerizable monomer and in a grafted state in the anhydride group-containing polypropylene graft is 0.1 to 5 wt%, preferably 0.4 to 3 wt%, based on the weight of the anhydride group-containing polypropylene graft; and, the molar ratio of the structural units derived from the anhydride monomer to the structural units derived from the alkenyl-containing polymerizable monomer in the anhydride group-containing polypropylene graft is 1: 1-20, and preferably 1: 1-10;

the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

**2.** The anhydride group-containing polypropylene graft as claimed in claim 1, wherein, the polypropylene copolymer has at least one of the following characteristics: the melt flow rate under a load of 2.16 kg at 230°C is 0.01 to 60 g/10 min, preferably 0.05 to 35 g/10 min, and more preferably 0.5 to 15 g/10 min; the melting temperature Tm is 100°C or higher, preferably 110 to 180°C, more preferably 110 to 170°C, more further preferably 120 to 170°C, and still more further preferably 120 to 166°C; the weight average molecular weight is preferably $20\times10^4$ to $60\times10^4$ g/mol.

**3.** The anhydride group-containing polypropylene graft as claimed in claim 1 or 2, wherein, the comonomer of the polypropylene copolymer is at least one selected from $C_2$-$C_8$ alpha-olefins other than propylene; preferably, the comonomer of the polypropylene copolymer is at least one selected from ethylene, 1-butene, 1-pentene, 4-methyl-1-pentene, 1-hexene, 1-heptene and 1-octene; further preferably, the comonomer of the polypropylene copolymer is ethylene and/or 1-butene; and still further preferably, the polypropylene copolymer consists of propylene and ethylene.

**4.** The anhydride group-containing polypropylene graft as claimed in any one of claims 1-3, wherein, the anhydride group-containing polypropylene graft is prepared by a solid phase grafting reaction of a polypropylene copolymer, an anhydride monomer and an alkenyl-containing polymerizable monomer.

**5.** The anhydride group-containing polypropylene graft as claimed in any one of claims 1-4, wherein, the content of the structural units derived from the anhydride monomer and in a grafted state in the anhydride group-containing polypropylene graft is 0.05 to 2 wt%, preferably 0.2 to 0.7 wt%.

**6.** The anhydride group-containing polypropylene graft as claimed in any one of claims 1-5, wherein, the anhydride is selected from anhydrides having at least one olefinic unsaturation; preferably, the anhydride is selected from maleic anhydride and itaconic anhydride; further preferably, the acid anhydride is maleic anhydride.

**7.** The anhydride group-containing polypropylene graft as claimed in any one of claims 1-6, wherein, the anhydride group-containing polypropylene graft has at least one of the following characteristics: the melt flow rate under a load of 2.16 kg at 230°C is 0.01 to 30 g/10 min, preferably 0.05 to 20 g/10 min, further preferably 0.1 to 10 g/10 min, and more preferably 0.2 to 8 g/10 min; the flexural modulus is 10 to 1050 MPa, preferably 20 to 1000 MPa, and more preferably 50 to 500 MPa; the elongation at break is ≥ 200%, preferably ≥ 300%.

**8.** The anhydride group-containing polypropylene graft as claimed in any one of claims 1-7, wherein, the anhydride group-containing polypropylene graft has at least one of the following characteristics:

- the working temperature of the anhydride group-containing polypropylene graft is ≥ 90°C, and preferably 90 to 160°C;
- the breakdown field strength $E_g$ at 90°C of the anhydride group-containing polypropylene graft is ≥ 210 kV/mm, and preferably 210 to 800 kV/mm;
- the breakdown field strength change rate ΔE/E, which is the difference ΔE between the breakdown field strength $E_g$ at 90°C of the anhydride group-containing polypropylene graft and the breakdown field strength E at 90°C of the polypropylene copolymer divided by the breakdown field strength E at 90°C of the polypropylene copolymer, is greater than 1.8%, preferably 2 to 50%, more preferably 5 to 35%, and further preferably 8 to 28%;
- the direct current volume resistivity $\rho_{vg}$ at 90°C and 15 kV/mm field strength of the anhydride group-containing polypropylene graft is ≥ $1.5\times10^{13}$ Ω.m, preferably $1.5\times10^{13}$ Ω.m to $1.0\times10^{20}$ Ω.m;

- the ratio $\rho_{vg}/\rho_v$ of the direct current volume resistivity $\rho_{vg}$ at 90°C and 15 kV/mm field strength of the anhydride group-containing polypropylene graft to the direct current volume resistivity $\rho_v$ at 90°C and 15 kV/mm field strength of the polypropylene copolymer is greater than 2, preferably 2.1 to 40, more preferably 2.3 to 20, and further preferably 2.5 to 10.

**9.** The anhydride group-containing polypropylene graft as claimed in any one of claims 1-8, wherein, the alkenyl-containing polymerizable monomer is at least one selected from a monomer having the structure represented by formula 1,

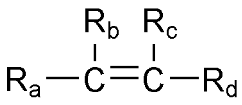
formula 1

in the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano.

**10.** The anhydride group-containing polypropylene graft as claimed in claim 9, wherein, $R_b$, $R_c$, $R_d$ are each independently selected from H, substituted or unsubstituted $C_1$-$C_6$ alkyl; preferably, $R_b$, $R_c$, $R_d$ are each independently selected from H, substituted or unsubstituted $C_1$-$C_3$ alkyl; $R_a$ is selected from substituted or unsubstituted $C_1$-$C_{20}$ alkyl, substituted or unsubstituted $C_1$-$C_{20}$ alkoxy, substituted or unsubstituted $C_6$-$C_{20}$ aryl, substituted or unsubstituted $C_1$-$C_{20}$ ester group, substituted or unsubstituted $C_1$-$C_{20}$ carboxyl, substituted or unsubstituted $C_3$-$C_{20}$ cycloalkyl or heterocyclyl, cyano; the substituent group is halogen, hydroxy, amino, $C_1$-$C_6$ alkyl, $C_3$-$C_6$ cycloalkyl; preferably, $R_a$ is selected from substituted or unsubstituted $C_1$-$C_{12}$ alkyl, substituted or unsubstituted $C_1$-$C_{18}$ alkoxy, substituted or unsubstituted $C_6$-$C_{12}$ aryl, substituted or unsubstituted $C_1$-$C_{12}$ ester group, substituted or unsubstituted $C_1$-$C_{12}$ carboxyl, substituted or unsubstituted $C_3$-$C_{12}$ cycloalkyl or heterocyclyl, cyano, the substituent group is halogen, $C_1$-$C_6$ alkyl, $C_3$-$C_6$ cycloalkyl; more preferably, $R_a$ is selected from substituted or unsubstituted $C_1$-$C_6$ alkyl, substituted or unsubstituted $C_1$-$C_{12}$ alkoxy, substituted or unsubstituted $C_6$-$C_8$ aryl, substituted or unsubstituted $C_1$-$C_6$ ester group, substituted or unsubstituted $C_1$-$C_6$ carboxyl, substituted or unsubstituted $C_3$-$C_6$ cycloalkyl or heterocyclyl, cyano; preferably, the heterocyclyl is selected from imidazolyl, pyrazolyl, carbazolyl, pyrrolidinonyl, pyridyl, piperidinyl, caprolactam group, pyrazinyl, thiazolyl, purinyl, morpholinyl, oxazolinyl.

**11.** The anhydride group-containing polypropylene graft as claimed in claim 9, wherein, $R_b$, $R_c$, $R_d$ are each independently selected from H, substituted or unsubstituted $C_1$-$C_6$ alkyl;

$R_a$ is selected from a group represented by formula 2, a group represented by formula 3, a group represented by formula 4, a group represented by formula 6, a combination of a group represented by formula 6 and a group represented by formula 7, a heterocyclic group;

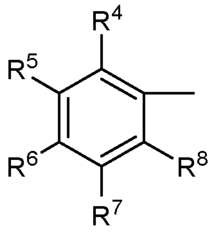
formula 2

in the formula 2, $R^4$-$R^8$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R^4$-$R^8$ are each independently selected from H, halogen, hydroxy, amino, substituted or unsubstituted $C_1$-$C_6$ alkyl, substituted or unsubstituted $C_1$-$C_6$ alkoxy;

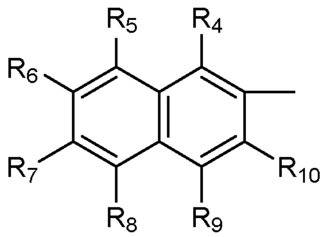

formula 3

in the formula 3, $R_4$-$R_{10}$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4$-$R_{10}$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

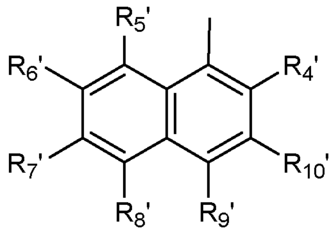

formula 4

in the formula 4, $R_4'$-$R_{10}'$ are each independently selected from H, halogen, hydroxy, amino, phosphoric group, sulfonic group, substituted or unsubstituted $C_1$-$C_{12}$ alkyl, substituted or unsubstituted $C_3$-$C_{12}$ cycloalkyl, substituted or unsubstituted $C_1$-$C_{12}$ alkoxy, substituted or unsubstituted $C_1$-$C_{12}$ ester group, substituted or unsubstituted $C_1$-$C_{12}$ amine group, the substituent group is selected from halogen, hydroxy, amino, phosphoric group, sulfonic group, $C_1$-$C_{12}$ alkyl, $C_3$-$C_{12}$ cycloalkyl, $C_1$-$C_{12}$ alkoxy, $C_1$-$C_{12}$ ester group, $C_1$-$C_{12}$ amine group; preferably, $R_4'$-$R_{10}'$ are each independently selected from H, halogen, hydroxy, amino, substituted or unsubstituted $C_1$-$C_6$ alkyl, substituted or unsubstituted $C_1$-$C_6$ alkoxy, the substituent group is selected from halogen, hydroxy, amino, $C_1$-$C_6$ alkyl, $C_1$-$C_6$ alkoxy;

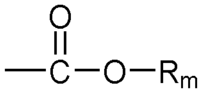 formula 6 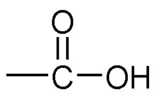 formula 7

in the formula 6, $R_m$ is selected from the following groups that are substituted or unsubstituted: $C_1$-$C_{20}$ linear alkyl, $C_3$-$C_{20}$ branched alkyl, $C_3$-$C_{12}$ cycloalkyl, $C_3$-$C_{12}$ epoxyalkyl, $C_3$-$C_{12}$ epoxyalkylalkyl, the substituent group is at least one selected from halogen, amino and hydroxyl.

**12.** The anhydride group-containing polypropylene graft as claimed in claim 9, wherein, the alkenyl-containing polymerizable monomer is at least one selected from vinyl acetate, styrene, α-methylstyrene, (meth)acrylates, vinyl alkyl ethers, vinyl pyrrolidone, vinyl pyridine, vinyl imidazole and acrylonitrile; the (meth)acrylate is preferably at least one selected from methyl (meth)acrylate, ethyl (meth)acrylate, and glycidyl (meth)acrylate; preferably, the alkenyl-containing polymerizable monomer is selected from vinyl acetate, styrene, α-methyl styrene; further preferably, the alkenyl-containing polymerizable monomer is styrene.

**13.** A method for preparing an anhydride group-containing polypropylene graft for an insulating material, the method comprising: subjecting a reaction mixture comprising a polypropylene copolymer, an anhydride monomer and an alkenyl-containing polymerizable monomer to grafting reaction in the presence of an inert gas, to obtain the anhydride group-containing polypropylene graft;

wherein, the conditions of the grafting reaction are such that: the content of the structural units derived from the

anhydride monomer and the alkenyl-containing polymerizable monomer and in a grafted state in the anhydride group-containing polypropylene graft is 0.1 to 5 wt%, preferably 0.4 to 3 wt%, based on the weight of the anhydride group-containing polypropylene graft; and, the molar ratio of the structural units derived from the anhydride monomer to the structural units derived from the alkenyl-containing polymerizable monomer in the anhydride group-containing polypropylene graft is 1: 1-20, and preferably 1: 1-10;
the polypropylene copolymer has at least one of the following characteristics: the comonomer content is 0.5 to 40 mol%, preferably 0.5 to 30 mol%, more preferably 4 to 25 wt%, and further preferably 4 to 22 wt%; the content of xylene solubles is 2 to 80 wt%, preferably 18 to 75 wt%, more preferably 30 to 70 wt%, and further preferably 30 to 67 wt%; the comonomer content in the xylene solubles is 10 to 70 wt%, preferably 10 to 50 wt%, and more preferably 20 to 35 wt%; the intrinsic viscosity ratio of the xylene solubles to the polypropylene copolymer is 0.3 to 5, preferably 0.5 to 3, and more preferably 0.8 to 1.3.

**14.** The method as claimed in claim 13, wherein, the polypropylene copolymer has at least one of the following characteristics: the melt flow rate at 230°C under a load of 2.16 kg is 0.01 to 60 g/10 min, preferably 0.05 to 35 g/10 min, and more preferably 0.5 to 15 g/10 min. The melting temperature Tm is 100°C or higher, preferably 110 to 180°C, more preferably 110 to 170°C, more further preferably 120 to 170°C, and still more further preferably 120 to 166°C. The weight average molecular weight is preferably $20\times10^4$ to $60\times10^4$ g/mol.

**15.** The method as claimed in claim 13 or 14, wherein, the content of the structural units derived from the anhydride monomer and in a grafted state in the anhydride group-containing polypropylene graft is 0.05 to 2 wt%, preferably 0.2 to 0.7 wt%.

**16.** The method as claimed in any one of claims 13-15, wherein, the anhydride is selected from anhydrides having at least one olefinic unsaturation; preferably, the anhydride is selected from maleic anhydride and itaconic anhydride; further preferably, the acid anhydride is maleic anhydride.

**17.** The method as claimed in any one of claims 13-16, wherein, the reaction mixture further comprises a free radical initiator;

preferably, the free radical initiator is selected from a peroxide-based free radical initiator and/or an azo-based free radical initiator;
the peroxide-based radical initiator is preferably at least one selected from the group consisting of dibenzoyl peroxide, dicumyl peroxide, di-tert-butyl peroxide, lauroyl peroxide, dodecyl peroxide, tert-butyl peroxybenzoate, diisopropyl peroxydicarbonate, tert-butyl peroxy(2-ethylhexanoate) and dicyclohexyl peroxydicarbonate; the azo-based radical initiator is preferably azobisisobutyronitrile and/or azobisisoheptonitrile.

**18.** The method as claimed in claim 17, wherein, the ratio of the mass of the free radical initiator to the total mass of the anhydride monomer and the alkenyl-containing polymerizable monomer is 0.1-10: 100, preferably 0.5-5: 100.

**19.** The method as claimed in any one of claims 13-18, wherein, the ratio of the total mass of the anhydride monomer and the alkenyl-containing polymerizable monomer to the mass of the polypropylene copolymer is 0.1-8: 100, and preferably 0.3-5: 100.

**20.** The method as claimed in any one of claims 13-19, wherein, the temperature of the grafting reaction is 30-130°C, and preferably 60-120°C; the time is 0.5-10 h, and preferably 1-5 h.

**21.** The method as claimed in any one of claims 13-20, wherein, the reaction mixture further comprises at least one of the following components: a dispersant, an interfacial agent and an organic solvent, wherein the mass content of the dispersant is 50-300% of the mass of the polypropylene copolymer, the mass content of the interfacial agent is 1-30% of the mass of the polypropylene copolymer, and the mass content of the organic solvent is 1-35% of the mass of the polypropylene copolymer.

**22.** The method as claimed in any one of claims 13-20, wherein, the preparation method comprises the following steps:

a. placing a polypropylene copolymer in a closed reactor, followed by inert gas replacement;
b. adding a free radical initiator, an anhydride monomer and an alkenyl-containing polymerizable monomer to the closed reactor, and mixing with stirring;
c. optionally adding an interfacial agent and optionally swelling the reaction system;

d. optionally adding a dispersant, and heating the reaction system to the grafting reaction temperature, to carry out the grafting reaction;
e. after the end of the reaction, optionally filtering, and drying to obtain the anhydride group-containing polypropylene graft.

**23.** The method as claimed in any one of claims 13-20, wherein, the preparation method comprises the following steps:

a. placing a polypropylene copolymer in a closed reactor, followed by inert gas replacement;
b. mixing an organic solvent and a free radical initiator, and adding the mixture to the closed reactor;
c. removing the organic solvent;
d. adding an anhydride monomer and an alkenyl-containing polymerizable monomer, optionally adding an interfacial agent, and optionally swelling the reaction system;
e. optionally adding a dispersant, and heating the reaction system to the grafting reaction temperature, to carry out the grafting reaction;
f. after the end of the reaction, optionally filtering, and drying to obtain the anhydride group-containing polypropylene graft.

**24.** The method as claimed in any one of claims 13-23, wherein, the alkenyl-containing polymerizable monomer is at least one selected from a monomer having the structure represented by formula 1,

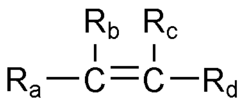
formula 1

in the formula 1, $R_b$, $R_c$, $R_d$ are each independently selected from H, substituted or unsubstituted alkyl; $R_a$ is selected from substituted or unsubstituted alkyl, substituted or unsubstituted alkoxy, substituted or unsubstituted aryl, substituted or unsubstituted ester group, substituted or unsubstituted carboxyl, substituted or unsubstituted cycloalkyl or heterocyclyl, cyano.

**25.** The method as claimed in claim 24, wherein, the alkenyl-containing polymerizable monomer is at least one selected from vinyl acetate, styrene, $\alpha$-methylstyrene, (meth)acrylates, vinyl alkyl ethers, vinyl pyrrolidone, vinyl pyridine, vinyl imidazole and acrylonitrile; the (meth)acrylate is preferably at least one selected from methyl (meth)acrylate, ethyl (meth)acrylate, and glycidyl (meth)acrylate; preferably, the alkenyl-containing polymerizable monomer is selected from vinyl acetate, styrene, $\alpha$-methyl styrene; further preferably, the alkenyl-containing polymerizable monomer is styrene.

**26.** An anhydride group-containing polypropylene graft for an insulating material obtained by the method as claimed in any one of claims 13-25.

**27.** Use of an anhydride group-containing polypropylene graft as claimed in any one of claim 1-12 or obtained by the method as claimed in any one of claims 13-25 as an insulating material.

**28.** The anhydride group-containing polypropylene graft for an insulating material as claimed in any one of claim 1-12 and 26, or the use as claimed in claim 27, wherein, the insulating material is a cable insulating material; preferably a direct current cable insulating material.

**29.** The anhydride group-containing polypropylene graft for an insulating material as claimed in any one of claim 1-12 and 26, or the use as claimed in claim 27, wherein, the insulating material is a cable insulating layer material.

**30.** A cable, **characterized in that** the cable comprises: at least one conductor and at least one electrically insulating layer surrounding the conductor; wherein, the material of the electrically insulating layer is at least one anhydride group-containing polypropylene graft as claimed in any one of claim 1-12 and 26.

**31.** The cable as claimed in claim 30, wherein, the cable has at least one cable core, and each cable core comprises, in order from inside to outside: a conductor, an optional conductor shielding layer, an electrically insulating layer, an optional electrically insulating shielding layer, an optional metal shielding layer.

**32.** The cable as claimed in claim 31, wherein, the cable further comprises an armor and/or a sheath layer.

**33.** The cable as claimed in claim 31, wherein, the cable further comprises a filling layer and/or a wrapping layer.

**34.** The cable as claimed in claim 30, wherein, the cable is a direct current cable or an alternating current cable; preferably the cable is a direct current cable.

**35.** An insulating material, **characterized in that** the insulating material comprises at least one anhydride group-containing polypropylene graft as claimed in any one of claim 1-12 and 26.

**36.** The insulating material as claimed in claim 35, wherein, the content of the at least one anhydride group-containing polypropylene graft is 20 to 100 wt%, preferably 40 to 100 wt%, more preferably 60 to 100 wt%, further preferably 80 to 100 wt%, and more further preferably 90 to 100 wt%, based on the weight of the insulating material.

**37.** The insulating material as claimed in claim 35 or 36, wherein, the insulating material further comprises one or more selected from antioxidants, stabilizers, processing aids, flame retardants, water tree retarding additives, acid or ion scavengers, inorganic fillers, voltage stabilizers and copper inhibitors.

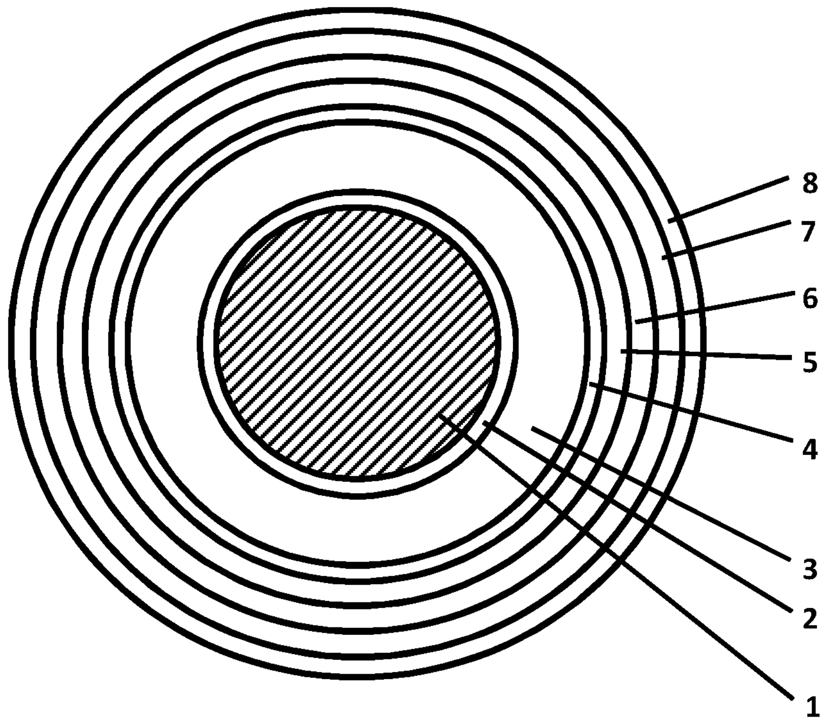


Figure 1

## INTERNATIONAL SEARCH REPORT

International application No.
**PCT/CN2020/127465**

**A. CLASSIFICATION OF SUBJECT MATTER**

C08F 255/02(2006.01)i； C08F 255/04(2006.01)i； C08F 222/06(2006.01)i； H01B 3/30(2006.01)i； H01B 7/02(2006.01)i

According to International Patent Classification (IPC) or to both national classification and IPC

**B. FIELDS SEARCHED**

Minimum documentation searched (classification system followed by classification symbols)

C08F; H01B

Documentation searched other than minimum documentation to the extent that such documents are included in the fields searched

Electronic data base consulted during the international search (name of data base and, where practicable, search terms used)

WPI, EPODOC, CNPAT, CNKI: 中国石油化工股份有限公司, 丙烯, 共聚, 苯乙烯, 接枝, 酸酐, 二甲苯, 可溶物, styrene, +propylene, graft, copolymer, C08F, maleic anhydride, PS

**C. DOCUMENTS CONSIDERED TO BE RELEVANT**

| Category* | Citation of document, with indication, where appropriate, of the relevant passages | Relevant to claim No. |
|---|---|---|
| A | CN 104327767 A (JIANGSU KAILI POLYMER SCIENCE AND TECHNOLOGY CO., LTD.) 04 February 2015 (2015-02-04)<br>embodiments 1-3 | 1-37 |
| A | CN 101519478 A (FUZHOU UNIVERSITY) 02 September 2009 (2009-09-02)<br>embodiments 1-3 | 1-37 |
| A | CN 104193903 A (DONGGUAN CALVIN PLASTIC & TECHNOLOGY CO., LTD.) 10 December 2014 (2014-12-10)<br>embodiments 1-7 | 1-37 |
| A | CN 106279544 A (INSTITUTE OF CHEMISTRY, CHINESE ACADEMY OF SCIENCES) 04 January 2017 (2017-01-04)<br>embodiments 1-8 | 1-37 |
| A | CN 101492517 A (BEIJING UNIVERSITY OF CHEMICAL TECHNOLOGY) 29 July 2009 (2009-07-29)<br>embodiments 1-7 | 1-37 |
| A | CN 106317334 A (INSTITUTE OF CHEMISTRY, CHINESE ACADEMY OF SCIENCES) 11 January 2017 (2017-01-11)<br>embodiments 1-6 | 1-37 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 January 2021** | **28 January 2021** |

Name and mailing address of the ISA/CN

**China National Intellectual Property Administration (ISA/CN)**
**No. 6, Xitucheng Road, Jimenqiao, Haidian District, Beijing 100088**
**China**

Facsimile No. **(86-10)62019451**

Authorized officer

Telephone No.

Form PCT/ISA/210 (second sheet) (January 2015)

**INTERNATIONAL SEARCH REPORT**

International application No.
**PCT/CN2020/127465**

**C. DOCUMENTS CONSIDERED TO BE RELEVANT**

| Category* | Citation of document, with indication, where appropriate, of the relevant passages | Relevant to claim No. |
|---|---|---|
| A | US 2004087720 A1 (KALLE GMBH & CO. KG) 06 May 2004 (2004-05-06) claims 1-17 | 1-37 |
| A | EP 1101779 A1 (NIPPON PAPER INDUSTRIES CO., LTD.) 23 May 2001 (2001-05-23) embodiments 1-3 | 1-37 |

Form PCT/ISA/210 (second sheet) (January 2015)

**INTERNATIONAL SEARCH REPORT**
**Information on patent family members**

International application No.
**PCT/CN2020/127465**

| Patent document cited in search report | | | Publication date (day/month/year) | Patent family member(s) | | | Publication date (day/month/year) |
|---|---|---|---|---|---|---|---|
| CN | 104327767 | A | 04 February 2015 | CN | 104327767 | B | 07 September 2016 |
| CN | 101519478 | A | 02 September 2009 | CN | 101519478 | B | 20 April 2011 |
| CN | 104193903 | A | 10 December 2014 | None | | | |
| CN | 106279544 | A | 04 January 2017 | CN | 106279544 | B | 12 March 2019 |
| CN | 101492517 | A | 29 July 2009 | CN | 101492517 | B | 16 March 2011 |
| CN | 106317334 | A | 11 January 2017 | CN | 106317334 | B | 22 January 2019 |
| US | 2004087720 | A1 | 06 May 2004 | US | 6610783 | B2 | 26 August 2003 |
| | | | | PL | 349868 | A1 | 08 April 2002 |
| | | | | EP | 1193295 | B1 | 09 August 2006 |
| | | | | US | 2002065364 | A1 | 30 May 2002 |
| | | | | EP | 1193295 | B8 | 02 November 2006 |
| | | | | EP | 1193295 | A3 | 15 January 2003 |
| | | | | DE | 50110672 | D1 | 21 September 2006 |
| | | | | JP | 2002146183 | A | 22 May 2002 |
| | | | | EP | 1193295 | A2 | 03 April 2002 |
| | | | | US | 6749912 | B2 | 15 June 2004 |
| | | | | AT | 335789 | T | 15 September 2006 |
| | | | | DE | 10047772 | A1 | 18 April 2002 |
| EP | 1101779 | A1 | 23 May 2001 | JP | 3615103 | B2 | 26 January 2005 |
| | | | | US | 6426388 | B1 | 30 July 2002 |
| | | | | JP | 2001139642 | A | 22 May 2001 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 1081683
- CN 1108315
- CN 1228096
- CN 1281380
- CN 1132865 C
- CN 102020733 A
- CN 106543369 A
- CN 104499281 A
- CN 102108112 A
- CN 109251270 A
- CN 1884326 A
- CN 101492517 B
- CN 101679557 A
- CN 101058654 A


### Non-patent literature cited in the description


- **ZHANG GUANGPING.** Solid-phase grafting of maleic anhydride onto polypropylene in helical ribbon reactor. *China Plastics,* February 2002, vol. 16 (2), 69-71